# EUROPÄISCHE PATENTANMELDUNG

(11) **EP 4 442 721 A1**
(43) Veröffentlichungstag der Anmeldung: **09.10.2024**
(21) Anmeldenummer: 23166786.6
(22) Anmeldetag: 05.04.2023
(51) Int. Cl.: C08F 220/34, C08F 222/10, C09D 133/08, C09D 133/14

(54) **ENAMINE ALS INITIATOREN BEI DER HÄRTUNG VON RADIKALISCH HÄRTENDEN REAKTIVHARZEN FÜR DIE CHEMISCHE BEFESTIGUNG**

(71) Anmelder: Hilti Aktiengesellschaft, 9494 Schaan (LI)
(72) Erfinder: Bürgel, Thomas, 86899 Landsberg (DE); Sirch, Vanessa, 86830 Schwabmünchen (DE); Moszner, Frank, 8055 Zürich (CH)
(74) Vertreter: Hilti Aktiengesellschaft Corporate Intellectual Property

(57) **Zusammenfassung**

Es wird ein Härtersystem für radikalisch polymerisierbare Verbindungen beschrieben welches ein Enamin und ein Übergangsmetall in Form eines Salzes oder eines Komplexes enthält, und dessen Verwendung für die chemische Befestigung beschrieben. Ferner wird ein das Härtersystem enthaltende Reaktivharzsystem und ein das Härtersystem enthaltende Mehrkomponenten-Reaktivharzsystem sowie deren Verwendung für die chemische Befestigung beschrieben.

## Beschreibung

Die vorliegende Erfindung betrifft ein Härtersystem für ein Reaktivharzsystem, welches radikalisch polymerisierbare Verbindungen beinhaltet, wobei das Härtersystem ein Enamin und ein Übergangsmetall in Form eines Salzes oder eines Komplexes, umfasst, ein dieses Härtersystem enthaltendes Reaktivharzsystem und ein dieses Härtersystem enthaltende Mehrkomponenten-Reaktivharzsystem sowie deren Verwendung, insbesondere für die chemische Befestigung.

Die Verwendung von Reaktivharzmischungen auf Basis radikalisch polymerisierbarer Verbindungen ist seit langem bekannt. Im Bereich der Befestigungstechnik hat sich die Verwendung von Reaktivharzmischungen als organisches Bindemittel in der chemischen Befestigungstechnik durchgesetzt. Es handelt sich dabei häufig um Zweikomponentensysteme, wobei die A Komponente die Reaktivharzmischung und die B Komponente das Härtungsmittel enthält. Andere übliche Bestandteile wie Füllmittel, Beschleuniger, Stabilisatoren, Thixotropiermittel, Phlegmatisierungsmittel, Lösungsmittel einschließlich Reaktivlösungsmittel können in der einen und/oder der anderen Komponente enthalten sein. Durch Vermischen der beiden Komponenten wird dann durch Radikalbildung die Reaktion in Gang gebracht und das Harz zum Duromeren gehärtet.

Radikalisch härtende Systeme, insbesondere bei Raumtemperatur härtende Systeme benötigen sogenannte Radikalstarter, auch Initiatoren genannt, damit die radikalische Polymerisation ausgelöst werden kann. Im Bereich der chemischen Befestigungstechnik haben sich aufgrund ihrer Eigenschaften die in der Anmeldung DE 3226602 A1 beschriebene Härterzusammensetzung, umfassend Benzoylperoxid als Radikalstarter und eine aminische Verbindung als Beschleuniger, und die in der Anmeldung EP 1586569 A1 beschriebene Härterzusammensetzung, umfassend einen Perester als Härter und eine Metallverbindung als Beschleuniger, durchgesetzt. Diese Härterzusammensetzungen erlauben auch bei sehr tiefen Temperaturen bis -30°C eine schnelle und recht vollständige Aushärtung. Darüber hinaus sind diese Systeme hinsichtlich der Mischungsverhältnisse von Reaktivharz und Härter sehr robust. Somit sind sie für die Verwendung unter Baustellenbedingungen geeignet.

Nachteilig an diesen Härterzusammensetzungen jedoch ist, dass in beiden Fällen Peroxide als Radikalstarter verwendet werden. Diese sind thermisch sensibel und reagieren sehr empfindlich auf Verunreinigungen. Dies führt zu erheblichen Einschränkungen bei der Formulierung von pastösen Härterkomponenten vor allem für Injektionsmörtel hinsichtlich Lagertemperaturen, Lagerstabilität und der Auswahl geeigneter Komponenten. Um den Einsatz von Peroxiden, wie Dibenzoylperoxid, Perestern und dergleichen, zu ermöglichen, werden zu deren Stabilisierung Phlegmatisierungsmittel, wie Phthalate oder Wasser zugegeben. Diese beeinträchtigen jedoch signifikant die mechanische Leistung von Reaktivharzmischungen bei Verwendung beispielsweise als Reaktionsharzmörtel für die chemische Befestigung.

Ferner sind diese bekannten Härterzusammensetzungen insofern nachteilig als sie Peroxidmengen von 0,5 Gew.-% und größer enthalten müssen, was problematisch ist, da peroxidhaltige Produkte ab einer Konzentration von 1 %, etwa für Dibenzoylperoxid, in einigen Ländern als sensibilisierend gekennzeichnet werden müssen. Ähnliches gilt auch für die aminischen Beschleuniger, die zum Teil ebenfalls kennzeichnungspflichtig sind.

Bisher gab es einige Versuche, die Peroxidmenge so zu reduzieren, dass diese unter die Kennzeichnungsgrenze fällt, oder ganz auf die Verwendung von Peroxiden als Radikalinitiator zu verzichten.

Aus der DE 102010051818 B3 sind Zusammensetzungen für die chemische Befestigung bekannt, deren Peroxidmenge reduziert wurde. Nachteilig an diesen Zusammensetzungen ist, dass die damit erreichbaren Lastwerte nicht besonders hoch sind.

In der DE 102011078785 A1 sind Zusammensetzungen für die chemische Befestigung beschrieben, die ein peroxidfreies Härtersystem basierend auf 1,3-Dioxoverbindungen als Härter und eine Manganverbindung als Co-Initiator verwenden. Damit kann zwar auf Peroxide verzichtet werden, allerdings weisen diese Zusammensetzungen den Nachteil auf, dass sie eine hohe Temperaturabhängigkeit bei der Härtung zeigen. Zwar führt das Härtersystem bei Raumtemperatur und bei erhöhten Temperaturen zu einer guten Aushärtung der Zusammensetzungen, allerdings ist die Härtungsreaktion bei tiefen Temperaturen zu langsam oder kommt ganz zum Erliegen, so dass die Aushärtung ungenügend ist oder ganz ausbleibt.

Zusammensetzungen für die chemische Befestigung, die ebenfalls auf Peroxide als Initiatoren verzichten sind aus der EP 3313896 A1, EP 3775017 A1 und WO 22/002567 A1 bekannt.

Die EP 3313896 A1 beschreibt ein Härtersystem für eine Kunstharzzusammensetzung mit radikalisch polymerisierbaren Verbindungen, welche einen Aktivator in Form eines Metallsalzes und als Radikalstarter mindestens ein Aldehyd und/oder Keton und mindestens ein primäres Amin, und/oder mindestens ein Aldimin oder mindestens ein Ketimin, oder eine Mischung von zwei oder mehr der Bestandteile enthält. Mit diesem System soll eine kennzeichnungsfreie Zusammensetzung formuliert werden können. Allerdings ist deren Leistungsfähigkeit begrenzt und die Aushärtung ist stark temperaturabhängig, wobei die Verarbeitungszeit der Zusammensetzungen bei höheren Anwendungstemperaturen sehr kurz ist und die Aushärtezeit bei niedrigen Anwendungstemperaturen sehr lang ist.

Die EP 3775017 A1 beschreibt die Verwendung von als Inhibitoren für die radikalische Polymerisation bekannten Verbindungen, wie Phenole, sowie von Triphenylphosphit, Triphenylphosphin, p-Toluolsulfonsäure, N-Isopropyl-N'-phenyl-phenylendiamin und NH-aciden Verbindungen, in Kombination mit einem Härtersystem, welches ein Aldehyd und/oder Keton und ein primäres Amin, ein Aldimin oder ein Ketimin, oder eine Mischung davon, und einen weiteren Aktivator (Beschleuniger) in Form eines Metallsalzes, als Initiatorsystem für eine radikalisch polymerisierbare Verbindungen beinhaltende Kunstharzzusammensetzung umfasst. Hierdurch soll die radikalische Polymerisation beschleunigt und die Durchhärtung verbessert werden, insbesondere bei tiefen Temperaturen.

Die WO 22/002567 A1 beschreibt einen speziellen Typ von Iminen, der als Teil eines Härtungssystems für radikalisch polymerisierbare Reaktivharze und/oder für durch Polyaddition härtbare Reaktivharze geeignet sind. Diese Imine sind erhältlich durch Umsetzung eines aminofunktionalisierten Polyoxyalkylens, dessen Polyoxyalkylenketten ein Copolymeres aus Oxyethylen- und Oxypropyleneinheiten sind, wobei diese Polyoxyalkylenketten primäre Aminogruppen tragen, und eines Ketons und/oder Aldehyds mit einem Wasserstoffatom am Kohlenstoffatom in α-Stellung zum Carbonylkohlenstoff. Hierdurch soll eine erhöhte Reaktivität im Vergleich zu vergleichbaren, bis dahin bekannten Systemen sowie verbesserte Verbundspannungen erhalten werden. Außerdem soll damit eine Kennzeichnung vermieden werden, wie sie durch kommerziell erhältliche Imine und solche aus der EP 3313896 A1 und EP 3775017 A1 bekannten Verbindungen erforderlich wäre.

Wie sich durch Versuche gezeigt hat, weisen die aus der EP 3313896 A1, EP 3775017 A1 und WO 22/002567 A1 bekannten Kunstharzzusammensetzungen jedoch den Nachteil auf, dass ohne weitere Anpassung der Zusammensetzung ihr erreichbares Lastniveau eingeschränkt ist, da die Haftung der ausgehärteten Mörtelmasse an der Bohrlochwand nicht optimal ist. Dies zeigt sich durch das Versagensbild bei Auszugsversuchen, bei denen das Befestigungssystems aus Ankerstange und Mörtelmasse aus dem Bohrloch gezogen werden konnte. Somit sind weitere Maßnahmen erforderlich, wie etwa die Zugabe weiterer Verbindungen, was die Komplexität des Systems weiter erhöht.

Es besteht somit Bedarf an einem Härtersystem für Reaktivharzsysteme auf Basis radikalisch polymerisierbarer Verbindungen zur Verwendung als Reaktionsharzmörteln, insbesondere für die chemischen Befestigung, welches die Nachteile der bekannten Härtersysteme nicht aufweist und welches jedoch die positiven Eigenschaften der Reaktionsharzmörtel nicht negativ beeinflusst.

Genauer besteht Bedarf an einem Härtersystem für Reaktivharzsysteme auf Basis radikalisch polymerisierbarer Verbindungen für die chemische Befestigung, mit dem Mörtel bereitgestellt werden können, die kennzeichnungsfrei sind, deren Aushärtung weniger temperaturabhängig als die bekannten Härtersysteme ist und mit denen eine bessere Anbindung der ausgehärteten Mörtelmassen an den Untergrund und damit ein höheres Lastniveau einer Befestigungsanordnung erreicht werden kann.

Die Aufgabe der vorliegenden Erfindung besteht nun darin, ein Härtersystem für ein Reaktivharzsystem auf Basis radikalisch polymerisierbarer Verbindungen zur Verwendung in Reaktionsharzmörteln für die chemische Befestigung von Verankerungsmitteln bereitzustellen, das auf die Verwendung von Peroxiden, Perestern, Perketalen oder Hydroperoxiden verzichtet, demzufolge weniger kritisch gekennzeichnet ist, damit die Formulierung von kennzeichnungsfreien Produkten zulassen, und dennoch die vorteilhaften Eigenschaften der peroxidhaltigen Härtersysteme aus dem Stand der Technik aufweist, wie das Erreichen eines hohen Lastniveaus und eine weitgehend temperaturunabhängige Aushärtung.

Diese Aufgabe wird durch die Bereitstellung eines Härtersystems gelöst, welches ein Enamin mit einem metallbasierten Aktivator enthält und frei von Peroxiden, Perestern, Perketalen und Hydroperoxiden ist.

Überraschenderweise hat sich gezeigt, dass durch den Einsatz von Kondensationsprodukten aus sekundären Aminen mit Aldehyden oder Ketonen, den Enaminen, zusammen mit einem metallbasierten Aktivator Härtersysteme formuliert werden können, die als Härter für radikalische härtende Harze, wie sie in chemischen Dübeln verwendet werden, eingesetzt werden können. Damit können die bisher verwendeten Peroxide, welche unter anderem zur Kennzeichnung der Mörtelmassen führen, durch kennzeichnungsfreie Verbindungen ersetzt werden, ohne dass auf die vorteilhaften Eigenschaften der Peroxide verzichtet werden muss, wie Verwendung in einem großen Temperaturbereich.

Durch den Verzicht auf den Einsatz von Peroxiden, Perestern, Perketalen oder Hydroperoxiden haben die erfindungsgemäßen Härtersysteme eine Reihe von weiteren Vorteilen gegenüber den aus dem Stand der Technik bekannten Systemen. Es ergeben sich beispielsweise keine sicherheitsrelevanten Einschränkungen bezüglich Transports und Lagerung der Komponenten, insbesondere keine Kennzeichnung als brandfördernd. Es kann ferner auf den Einsatz von Phlegmatisierungsmitteln, welche als Weichmacher die mechanische Leistung der ausgehärteten Reaktionsharze beeinflussen, verzichtet werden. Außerdem müssen bei der Formulierung von Mehrkomponenten-Reaktionsharzmassen weniger Einschränkungen hinsichtlich der weiteren Rezepturbestandteile berücksichtigt werden.

Gegenüber den aus dem Stand der Technik bekannten peroxidfreien Systeme haben die erfindungsgemäßen Härtersysteme den Vorteil, dass mit ihnen eine bessere Anbindung der ausgehärteten Mörtelmassen an den Untergrund erfolgt, ohne weitere Verbindungen in die Zusammensetzung einbringen zu müssen, womit die Zusammensetzung weniger komplex wird.

Ein erster Gegenstand der Erfindung ist ein Härtersystem gemäß Anspruch 1. Ein zweiter Gegenstand der Erfindung ist die Verwendung des erfindungsgemäßen Härtersystems als Initiatorsystem für ein Reaktivharzsystem auf Basis radikalisch polymerisierbarer Verbindungen gemäß Anspruch 11. Ein dritter Gegenstand der Erfindung ist ein Reaktivharzsystem, welches eine radikalisch polymerisierbare Verbindung als Reaktivharz und das erfindungsgemäße Härtersystem enthält, gemäß Anspruch 13. Ein vierter Gegenstand der Erfindung ist ein Mehrkomponenten-Reaktivharzsystem mit einer Harzkomponente und einer Härterkomponente gemäß Anspruch 16. Ein fünfter Gegenstand der Erfindung ist die Verwendung eines erfindungsgemäßen Reaktivharzsystems oder eines erfindungsgemäßen Mehrkomponenten-Reaktivharzsystems als Klebstoff, Beschichtungsstoff oder Formmasse gemäß Anspruch 18. Ein sechster Gegenstand der Erfindung ist die Verwendung eines erfindungsgemäßen Reaktivharzsystems oder eines erfindungsgemäßen Mehrkomponenten-Reaktivharzsystems zur Befestigung von Verankerungsmitteln in Substraten nach Anspruch 19.

Im Sinne der Erfindung bedeuten die verwendeten Begriffe:
- *"Inhibitor"* einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als *"Stabilisator"* bezeichnet) bzw. der eine radikalische Polymerisation eines Harzes nach Zugabe eines Initiators (üblicherweise in Verbindung mit einem Beschleuniger oder Aktivator) zeitlich verzögert (diese Stoffe werden in Fachkreisen auch als *"Inhibitor"* bezeichnet; die jeweilige Bedeutung des Begriffes erschließt sich aus dem Kontext);
- *"Initiator", "Härter"* oder *"Härtungsmittel"* einen Stoff, der (üblicherweise in Kombination mit einem Aktivator) reaktionsinitiierende Radikale bildet;
- *"Aktivator"* einen Stoff, der mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;
- "*Co-Aktivator"* einen Stoff, dessen Anwesenheit die Reaktion des Härters mit dem Aktivator verstärkt.
- *"Härtersystem",* eine Kombination aus dem eigentlichen Härtungsmittel (Initiator) und Aktivator und gegebenenfalls einem weiteren Aktivator (Co-Aktivator);
- *"Härterkomponente"* eine flüssige oder viskose Mischung aus dem Härtungsmittel, optional weiteren Komponenten, z.B. Co-Aktivator, Füllstoffen, Additiven; typischerweise ist die Härterzusammensetzung eine der beiden Komponenten eines Zweikomponenten-Reaktivharz-Systems zur chemischen Befestigung (in einem Mehrkomponenten-System auch als "*Härterzusammensetzung"* bezeichnet);
- *"peroxidfrei",* dass keine Peroxide, Perester, Perketale oder Hydroperoxide zugegeben werden;
- *"Reaktivharz"* eine üblicherweise feste oder hochviskose *"radikalisch polymerisierbare",* d.h. härtbare Verbindung, welche durch Polymerisation härtet und eine Harzmatrix bildet; das Reaktivharz ist das Umsetzungsprodukt einer Bulkreaktion an sich; hiervon ist auch der Reaktionsansatz zur Herstellung des Backbone-Harzes nach beendeter Reaktion umfasst, der ohne Isolierung des Produkts vorliegt und daher neben der radikalisch polymerisierbaren Verbindung, das Reaktivharz, einen Reaktivverdünner, einen Stabilisator und einen Katalysator, sofern verwendet, enthalten kann;
- *"Reaktivverdünner"* flüssige oder niedrigviskose Monomere und Backbone-Harze, welche andere Backbone-Harze oder den Reaktivharz-Masterbatch verdünnen und dadurch die zu deren Applikation notwendige Viskosität verleihen, zur Reaktion mit dem Reaktivharz befähigte funktionelle Gruppen enthalten und bei der Polymerisation (Härtung) zum überwiegenden Teil Bestandteil der gehärteten Masse (z.B. des Mörtels) werden; Reaktivverdünner werden auch co-polymerisierbares Monomer genannt;
- "*Reaktivharzmischung"* eine flüssige Mischung von Reaktivharz, Reaktivverdünnern und optional weiteren Komponenten, wie Aktivator und Inhibitoren, die durch Zusatz von Füllstoffen und weiteren Additiven, z.B. Rheologiehilfsmitteln zur Reaktivharzkomponente formuliert wird.
- *"Reaktivharzkomponente* eine flüssige oder viskose Mischung aus Reaktivharz, Füllstoffen, ggf. mindestens einem Reaktivverdünner und optional weiteren Komponenten, z.B. Additiven, wie Rheologieadditiven, Haftvermittlern, Aktivatoren und/oder Inhibitoren; typischerweise ist die Reaktivharzkomponente eine der beiden Komponenten eines Zweikomponenten-Reaktivharz-Systems zur chemischen Befestigung (auch als *"Reaktivharzzusammensetzung"* bezeichnet);
- *"Reaktivharzsystem"* eine flüssige oder viskose Mischung aus Reaktivharz, ggf. mindestens einem Reaktivverdünner, Füllstoffen und optional weiteren Komponenten, wie für die Reaktivharzzusammensetzung beschrieben. Zusätzlich enthält das Reaktivharz-System den Härter, ggf. mindestens einen reaktiven oder nicht reaktiven Verdünner, sowie Füllstoffe und Additiven, wie Rheologieadditive, Haftvermittler, (Co-)Aktivatoren und/oder Inhibitoren.
- "*Zweikomponenten-Reaktivharzsystem"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Backbone-Harzes erst nach dem Mischen der beiden Komponenten erfolgt;
- "*Mehrkomponenten-System"* bzw. "*Mehrkomponenten-Reaktivharzsystem"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Reaktivharzes erst nach dem Mischen aller Komponenten erfolgt;
- *"(Meth)acryl...*/*...(meth)acryl...",* dass sowohl die "Methacryl.../...methacryl..."- als auch die "Acryl.../...acryl..."-Verbindungen gemeint sein sollen; bevorzugt sind in der vorliegenden Erfindung "Methacryl.../...methacryl... *"*-Verbindungen gemeint;
- *"Epoxy(meth)acrylat"* eine Verbindung, die Acrylat- oder Methacrylatgruppen aufweist und im Wesentlichen frei von Epoxygruppen ist;
- *"Alkyl"* einen gesättigten Kohlenwasserstoffrest, der verzweigt oder unverzweigt sein kann; bevorzugt ein C₁-C₇-Alkyl, besonders bevorzugt ein C₁-C₄-Alkyl, also ein Alkyl ausgewählt aus der Gruppe bestehend aus Methyl, Ethyl, n-Propyl, iso-Propyl, n-Butyl, iso-Butyl, und tert-Butyl; Methyl, Ethyl und tert-Butyl sind besonders bevorzugt, und ganz besonders bevorzugt ist Methyl;
- *"Hydroxyalkyl"* ein Alkyl, das mindestens eine Hydroxylgruppe als Substituenten trägt;
- *"Alkenyl"* einen ungesättigten Kohlenwasserstoffrest mit mindestens einer Doppelbindung, der verzweigt oder unverzweigt sein kann; bevorzugt ein C₂-C₂₀-Alkenyl, besonders bevorzugt ein C₂-C₆-Alkenyl, also ein Alkenyl ausgewählt aus der Gruppe bestehend aus Ethenyl, Propenyl, Butenyl, Pentenyl und Hexenyl; Ethenyl, Propenyl und Butenyl sind besonders bevorzugt, und ganz besonders bevorzugt ist Ethenyl;
- *"kalthärtend",* dass ein Reaktivharz-System bei Raumtemperatur vollständig aushärten kann;
- *"ein", "eine", "einer"als* Artikel vor einer chemischen Verbindungsklasse, z.B. vor dem Wort "Enamin", dass eine oder mehrere unter diese chemische Verbindungsklasse fallende Verbindungen, z.B. verschiedene Enamine, gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus",*
- "*etwa"* oder *"circa"* oder "*ca*." vor einem Zahlenwert einen Bereich von ± 10% dieses Wertes, bevorzugt ± 2% dieses Wertes, bevorzugter ± 1% dieses Wertes, besonders bevorzugt ± 0% dieses Wertes (also genau diesen Wert).

Alle in diesem Text genannten Normen (z.B. DIN-Normen) wurden in der zum Anmeldetag dieser Anmeldung aktuellen Ausgabe verwendet.

### Härtersystem

Ein erster Gegenstand der Erfindung ist ein Härtersystem für ein Reaktivharzsystem, welches radikalisch polymerisierbare Verbindungen beinhaltet, wobei das Härtersystem
a) eine Verbindung der Formel (I) 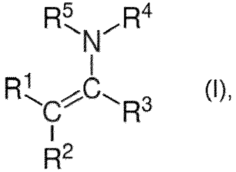 worin
   R¹, R² und R³ jeweils unabhängig voneinander ein Wasserstoffatom, eine lineare oder verzweigte Alkyl-, lineare oder verzweigte Alkenyl-, lineare oder verzweigte Alkylen-, Cycloalkyl-, Cycloalkenyl- oder Ar(alk)ylgruppe, wobei die Cycloalkyl-, die Cycloalkenyl und die Ar(alk)ylgruppe jeweils gegebenenfalls mindestens ein Heteroatom enthalten können und/oder substituiert sein können, sind,
   R⁴ und R⁵ jeweils unabhängig voneinander eine lineare oder verzweigte Alkyl-, lineare oder verzweigte Alkenyl-, lineare oder verzweigte Alkylen-, Cycloalkyl-, Cycloalkenyl- oder Ar(alk)ylgruppe, wobei die Cycloalkyl-, Cycloalkenyl- und die Ar(alk)ylgruppe die jeweils mindestens ein Heteroatom enthalten können und/oder substituiert sein können, sind, oder
   R¹ und R², R¹ und R³, R² und R³ sowie R⁴ und R⁵ zusammen jeweils unabhängig voneinander eine Cycloalkylen- oder Cycloalkenylgruppe, die jeweils auch Heteroatome im oder am Ring enthalten können und/oder substituiert sein können, bilden,
   und
b) ein Übergangsmetall in Form eines Salzes oder eines Komplexes, umfasst.

Die Verbindung der Formel (I) ist ein Enamin 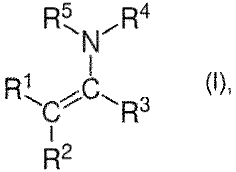 worin
R¹, R² und R³ jeweils unabhängig voneinander ein Wasserstoffatom, eine lineare oder verzweigte Alkyl-, lineare oder verzweigte Alkenyl-, lineare oder verzweigte Alkylen-, Cycloalkyl-, Cycloalkenyl- oder Ar(alk)ylgruppe, wobei die Cycloalkyl-, die Cycloalkenyl und die Ar(alk)ylgruppe jeweils gegebenenfalls mindestens ein Heteroatom enthalten können und/oder substituiert sein können, sind,
R⁴ und R⁵ jeweils unabhängig voneinander eine lineare oder verzweigte Alkyl-, lineare oder verzweigte Alkenyl-, lineare oder verzweigte Alkylen-, Cycloalkyl-, Cycloalkenyl- oder Ar(alk)ylgruppe, wobei die Cycloalkyl-, Cycloalkenyl- und die Ar(alk)ylgruppe die jeweils mindestens ein Heteroatom enthalten können und/oder substituiert sein können, sind, oder
R¹ und R², R¹ und R³, R² und R³ sowie R⁴ und R⁵ zusammen jeweils unabhängig voneinander eine Cycloalkylen- oder Cycloalkenylgruppe, die jeweils auch Heteroatome im oder am Ring enthalten können und/oder substituiert sein können, bilden.

R¹, R² und R³ sind unabhängig voneinander ein Wasserstoffatom, eine lineare oder verzweigte Alkyl-, lineare oder verzweigte Alkenyl-, lineare oder verzweigte Alkylen-, Cycloalkyl-, Cycloalkenyl- oder Ar(alk)ylgruppe, wobei die Cycloalkyl-, die Cycloalkenyl und die Ar(alk)ylgruppe jeweils gegebenenfalls mindestens ein Heteroatom enthalten können und/oder substituiert sein können.

Bevorzugt sind R¹ und R², unabhängig voneinander eine lineare oder verzweigte Alkylgruppe, weiter bevorzugt eine C₁-C₁₀-Alkylgruppe, noch weiter bevorzugt eine C₁-C₆-Alkylgruppe, und am stärksten bevorzugt eine C₁-C₃-Alkylgruppe. Ganz besonders bevorzugt ist R¹ eine Methyl- oder Ethylgruppe und R² eine Methyl-, Ethyl- oder Propylgruppe.

Bevorzugt ist R³ ein Wasserstoffatom, eine lineare oder verzweigte Alkylgruppe, weiter bevorzugt ein Wasserstoffatom oder eine lineare oder verzweigte C₁-C₆-Alkylgruppe, und ganz besonders bevorzugt ein Wasserstoffatom.

Alternativ können R¹ und R², R¹ und R³ sowie R² und R³ zusammen eine Cycloalkylen- oder Cycloalkenylgruppe, die auch mindestens ein Heteroatom enthalten können und/oder substituiert sein können, bilden, wobei bei zwei oder mehreren Heteroatomen, die Heteroatome gleich oder unterschiedlich sein können und bevorzugt unter Sauerstoff- (O), Stickstoff- (N) und Schwefelatomen (S), weiter bevorzugt unter Sauerstoff- (O) und Stickstoffatomen (N), ausgewählt sein können. Die Cycloalkenyl- oder Cycloalkenylgruppe kann substituiert sein. Die Heteroatome können im oder als Substituent am Ring enthalten sein.

R⁴ und R⁵ sind unabhängig voneinander eine lineare oder verzweigte Alkyl-, lineare oder verzweigte Alkenyl-, lineare oder verzweigte Alkylen-, Cycloalkyl-, Cycloalkenyl- oder Ar(alk)ylgruppe, wobei die Cycloalkyl-, Cycloalkenyl- und die Ar(alk)ylgruppe die jeweils mindestens ein Heteroatom enthalten können und/oder substituiert sein können.

Alternativ können R⁴ und R⁵ zusammen eine Cycloalkylen- oder Cycloalkenylgruppe, die auch mindestens ein Heteroatom enthalten kann, bilden. Sind zwei oder mehr Heteroatome enthalten, können die Heteroatome gleich oder unterschiedlich sein und bevorzugt unter Sauerstoff- (O), Stickstoff- (N) und Schwefelatomen (S), weiter bevorzugt Sauerstoff- (O) und Stickstoffatomen (N), ausgewählt sein können. Die Cycloalkenyl- oder Cycloalkenylgruppe kann substituiert sein. Die Heteroatome können im oder als Substituent am Ring enthalten sein.

Bevorzugt bilden R⁴ und R⁵ zusammen eine Alkylen- oder Cycloalkylengruppe, die auch mindestens ein Heteroatom, bevorzugt ein oder zwei Heteroatom bzw. Heteroatome enthält, weiter bevorzugt eine Cycloalkylengruppe mit zwei Heteroatomen, stärker bevorzugt eine C₅-C₈-Cycloalkylengruppe mit zwei Heteroatomen, noch stärker bevorzugt eine C₅-C₈-Cycloalkylengruppe mit einem Heteroatom oder zwei Heteroatomen, und am stärksten bevorzugt eine C₅-Cycloalkenylgruppe mit zwei Heteroatomen, wobei die Heteroatome Stickstoffatome (N) sind.

In einer bevorzugten Ausführungsform sind R¹, R² und R³ unabhängig voneinander ein Wasserstoffatom, eine lineare oder verzweigte Alkyl-, Cycloalkyl-, lineare oder verzweigte Alkenyl-, lineare oder verzweigte Alkylen-, Cycloalkenyl- oder Arylgruppe, die jeweils gegebenenfalls substituiert sein kann, und R⁴ und R⁵ zusammen eine Alkylen- oder Cycloalkyleneinheit, die auch mindestens ein Heteroatom, bevorzugt ein oder zwei Heteroatom bzw. Heteroatome, enthalten.

In einer weiter bevorzugten Ausführungsform sind R¹, R² und R³, unabhängig voneinander ein Wasserstoffatom, eine lineare oder verzweigte Alkylgruppe, weiter bevorzugt eine C₁-C₁₀-Alkylgruppe, noch weiter bevorzugt eine C₁-C₆-Alkylgruppe, und bilden R⁴ und R⁵ zusammen eine C₅-C₈-Cycloalkyleneinheit mit zwei Heteroatomen, noch stärker bevorzugt eine C₅-C₆-Cycloalkyleneinheit mit einem Heteroatom oder zwei Heteroatomen.

In einer noch weiter bevorzugten Ausführungsform sind R¹ und R² unabhängig voneinander eine lineare oder verzweigte Alkylgruppe, weiter bevorzugt eine C₁-C₁₀-Alkylgruppe, noch weiter bevorzugt eine C₁-C₆-Alkylgruppe, ist R³ ein Wasserstoffatom und bilden R⁴ und R⁵ zusammen eine C₅-C₈-Cycloalkyleneinheit mit zwei Heteroatomen, noch stärker bevorzugt eine C₅-C₆-Cycloalkyleneinheit mit einem Heteroatom oder zwei Heteroatomen.

In einer besonders bevorzugten Ausführungsform sind R¹ und R² unabhängig voneinander eine C₁-C₃-Alkylgruppe, ganz besonders bevorzugt jeweils eine Methylgruppe, ist R³ ein Wasserstoffatom und bilden R⁴ und R⁵ zusammen eine Cycloalkyleneinheit, die ein Stickstoffatom (N) und gegebenenfalls ein weiteres Stickstoffatom und/oder Sauerstoffatom (O) als Heteroatome trägt.

In einer ganz besonders bevorzugten Ausführungsform sind in der Verbindung der Formel (I) R¹ und R² eine Methyl-, Ethyl- oder Propylgruppe, ist R³ ein Wasserstoffatom und bilden R⁴ und R⁵ einen 5-gliedrigen Heterocyclus mit einem Stickstoffatom oder einen 6-gliedrigen Heterocyclus mit einem Sauerstoffatom und einem Stickstoffatom oder mit zwei Stickstoffatomen als Heteroatome, insbesondere einen Pyrrolidin-, Piperidin-, Piperazin- oder Morpholinrest.

Die beschriebenen Enamine sind erhältlich durch Kondensationsreaktion von einem Aldehyd oder einem Keton der bzw. das jeweils ein Wasserstoffatom am Kohlenstoffatom in α-Stellung zum Carbonylkohlenstoff trägt, mit einem mindestens eine sekundäre Aminogruppe aufweisenden Amin.

Bei den verwendbaren bzw. geeigneten Aldehyden oder Ketonen handelt es sich insbesondere um solche der Formel (II) 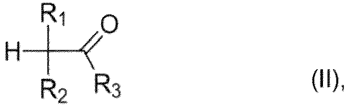 worin:
R¹, R² und R³ die wie oben für Formel (I) beschriebene Bedeutung haben.

Bevorzugt handelt es sich bei den Aldehyden und/oder Ketonen um Verbindungen, welche mindestens ein oder mehrere (primäre und/oder sekundäre) Wasserstoffatome am zur Carbonylgruppe stehenden α-Kohlenstoffatom aufweisen. Beispiele derartiger Aldehyde sind Acetaldehyd, Propanal (Propionaldehyd), 2-Methylpropanal (Isobutyraldehyd), 2,2-Dimethylpropanal (Pivalaldehyd, Trimethylacetaldehyd), Butanal, 2-Methylbutanal (2-Methylbutyraldehyd) 2-Ethylbutanal, n-Pentanal (Valeraldehyd), iso-Pentanal (Isovaleraldehyd), 2-Methylpentanal, 3-Methylpentanal, 4-Methylpentanal, 2,3-Dimethylpentanal, Hexanal, 2-Ethylhexanal, Heptanal, Octanal, Nonanal, Decanal, Undecanal, 2-Methylundecanal, Dodecanal, oder Methoxyacetaldehyd, oder 3,7-Dimethyl-6-octenal (Citronellal), Malondialdehyd (Propandial), Succinaldehyd (Butandial), Glutardialdehyd (Pentandial), Adipaldehyd (Hexandial) oder 3,7-Dimethyl-7-hydroxyoctanal (Hydroxycitronellal).

Weiter bevorzugt handelt es sich bei den Aldehyden und/oder Ketonen um Verbindungen, welche am zur Carbonylgruppe stehenden α-Kohlenstoffatom eine Verzweigung und/oder Doppelbindung aufweisen. Hierdurch weisen die weiter bevorzugten Aldehyde und/oder Ketone nur noch ein (tertiäres) Wasserstoffatom am zur Carbonylgruppe stehenden α-Kohlenstoffatom auf. Beispiele besonders bevorzugter Aldehyde sind Isobutyraldehyd, 2-Ethylhexanal, 2-Methylbutanal, 2-Ethylbutanal, 2-Methylvaleraldehyd, 2,3-Dimethylvaleraldehyd, 2,6-Dimethyl-5-heptenal, Cyclopentancarbaldehyd, Cyclohexancarbaldehyd, 2-Methylcyclopentanon 4-Formyltetrahydropyran, 2-Phenyl-propionaldehyd oder 3,7-Dimethyl-2,6-octadienal (Citral), 3-(4-tert-Butylphenyl)-2-methylpropanal (Lilial, Lysmeral), Tetrahydrofuran-3-carboxaldehyd, Tetrahydro-2-furancarboxaldehyd, 4-Formyltetrahydropyran, Tetrahydro-2H-pyran-2-carbaldehyd oder Tetrahydro-pyran-3-carbaldehyd. Als weiter bevorzugte Ketone seien hier beispielhaft Diisopropylketon, 3-Methyl-2-pentanon, 2-Methylcyclohexanon oder lonone genannt.

Besonders bevorzugt sind Aldehyde mit einer Verzweigung am zur Carbonylgruppe stehenden α-Kohlenstoffatom.

Noch weiter bevorzugt handelt es sich dabei um Aldehyde mit einer Verzweigung und einem Wasserstoffatom am zur Carbonylgruppe stehenden α-Kohlenstoff.

Insbesondere bevorzugt sind auch die in den Beispielen genannten Aldehyde sowie Gemische von zwei oder mehr davon.

Ganz besonders bevorzugt sind Isobutyraldehyd, 2-Methylbutanal, 2-Ethylbutanal und 2-Methylpentanal.

Bei den verwendbaren bzw. geeigneten sekundären Aminen handelt es sich insbesondere um solche der Formel (III)

NHR⁴R⁵ (III),

worin
R⁴ und R⁵ die wie oben für Formel (I) beschriebene Bedeutung haben.

Bevorzugt bilden R⁴ und R⁵ zusammen eine Alkylen- oder Cycloalkylengruppe, die auch mindestens ein Heteroatom, bevorzugt ein oder zwei Heteroatom bzw. Heteroatome, weiter bevorzugt eine Cycloalkylengruppe mit zwei Heteroatomen, stärker bevorzugt eine C₅-C₈-Cycloalkyleneinheit mit zwei Heteroatomen, noch stärker bevorzugt eine C₅-C₆-Cycloalkyleneinheit mit einem Heteroatom oder zwei Heteroatomen, und am stärksten bevorzugt eine C₅-Cycloalkenylgruppe mit zwei Heteroatomen, wobei die Heteroatome Stickstoffatome (N) sind.

Geeignete sekundäre Amine sind beispielsweise, 2-Methyl-pyrrolidin, 2,5-Dimethylpyrrolidin, Piperidin, 4-(1-Pyrrolidinyl)-piperidin, Piperazin, 1-Methylpiperazin, 2,5- und 2,6-Dimethyl-piperazin, 2,3,5,6-Tetramethylpiperazin, 1-(2-Methoxyethyl)piperazin, Pyrrolidin, Morpholin, Thiomorpholin, 3-Phenyl-thiomorpholin, Dimethylamin, Diethylamin, Di-n-propylamin, Di-iso-propylamin, Di-n-butylamin, Di-iso-butylamin, Di-tert.-butylamin, Diethanolamin, und dergleichen, N-Benzylmethylamin, Dibenzylamin, N,N'-Dimethylethylendiamin, N,N'-Dimethyl-diethylentriamin, N,N'-Diisopropylethylendiamin, N,N'-Dibutylethylendiamin, N,N'-Dimethyl-dipropylentriamin, N,N-Bis-[3-(methylamino)-propyl]-methylamin, N,N'-Di-tert.-butylethylendiamin, Tris[2-(methylamino)-ethyl]-amin, N,N,N'-Trimethylethylendiamin, N,N-Dimethyl-N'-ethylethylendiamin, N,N'-Dimethyl-1,6-hexandiamin, N,N-Diethyl-2-(1-piperazinyl)ethanamin, sowie Homologe des Piperazins, wie 1,4,7-Triazacyclononan, 1,4,7,10-Tetraazacyclododecan, 1,4,8,11-Tetraazacyclotetradecan, oder 1,7-Dioxa-4,10-diazacyclododecan.

Insbesondere bevorzugt sind auch die in den Beispielen genannten Amine oder Gemische von zwei oder mehr davon.

Die Initiierung der Polymerisation und damit die Härtung der Reaktivharze basiert auf einer Reaktion des mindestens einen Enamins mit einem Aktivator. Geeignete Aktivatoren sind Übergangsmetalle in Form von Salzen und Verbindungen, was auch Oxide und Komplexe einschließt.

Bei den Übergangsmetallen in Form eines Metallsalzes, was auch Metallkomplexe und Metalloxide einschließt, handelt es sich vorzugsweise um ein oder mehrere Metallsalze oder insbesondere um ein oder mehrere Salze von organischen und/oder anorganischen Säuren mit Metallen, z.B. ausgewählt aus Kupfer, Eisen, Vanadium, Mangan, Cer, Kobalt, Zirkonium, oder Wismut, oder Gemischen von zwei oder mehr davon. Insbesondere sind die Metallsalze aus der Gruppe ausgewählt, die aus Vanadium, Eisen, Mangan und Kupfer besteht, insbesondere in Form von Salzen oder Komplexen mit anorganischen Säureresten, wie Sulfat- und/oder Carbonat-Resten und/oder organischen Säureresten, beispielsweise Carboxylatresten, wobei die organischen Säuren geradkettig oder verzweigt und vorzugsweise gesättigt sind, wie Carboxylate mit CH₃, C₂-C₂₀-Alkyl, einem C₆-C₂₄-Arylrest oder C₇-C₃₀-Aralkylrest, beispielsweise Octoat, z.B. 2-Ethylhexanoat (Isooctanoat), Neodecanoat, oder Acetylacetonat. Besonders bevorzugt sind Salze, die in organischen Medien löslich sind, wie Carboxylate, z.B. Octanoate, Naphthenate, Acetylacetonate, Acetate und Chinolate. Ganz besonders bevorzugt sind Mangan-, Vanadium-, Cobalt- und Kupfercarboxylate.

Die Übergangsmetalle sind unterschiedlich reaktiv. Die Reaktivität hängt von unterschiedlichen Faktoren ab, wie etwa deren Oxidationspotential, den verwendeten Salzen und Verbindungen, gegebenenfalls auch von der Form, in der die Übergangsmetalle vorliegen, etwa bei Lösungen, wobei das Lösungsmittel auch einen Einfluss auf die Reaktivität haben kann. Bei der Verwendung von weniger reaktiven Übergangsmetallsalzen und -verbindungen, die eine geringere Aktivität aufweisen, wie beispielsweise Eisen- und Kupfersalze und -verbindungen, ist ein weiterer Aktivator (Co-Aktivator) erforderlich, damit das Initiatorsystem eine hinreichende Aktivität aufweist, um die radikalische Polymerisation unter Baustellenbedingungen initiieren zu können. Unter Bedingungen, wie sie bei der Verwendung von Reaktivharzen als Mörtel für die chemische Befestigung herrschen, insbesondere im basischen Milieu und bei stark unterschiedlichen bzw. schwankenden Temperaturen, sind die Enamine in Kombination mit einem Aktivator allein nicht reaktiv genug. Daher werden diese mittels Zugabe eines Co-Aktivators aktiviert.

Für das erfindungsgemäße Härtersystem, insbesondere bei Verwendung von Kupfer als Aktivator, sind Phenole, wie Butylhydroxytoluol, Hydrochinon, Brenzkatechin sowie deren alkylierte oder veretherte Derivate (z.B. tert-Butylbrenzkatechin oder Hydrochinonmonomethylether), Phosphite, wie Triethyl- oder Triphenylphosphat), Phthalimid, Saccharin und dergleichen geeignete Co-Aktivatoren für das erfindungsgemäße Enamin-basierten Härtersystem.

Bevorzugt kann Saccharin als Co-Aktivator verwendet werden.

Als Co-Aktivator, gegebenenfalls zusätzlich denkbar sind auch die üblicherweise in Befestigungssystemen verwendeten Amine, wie beispielsweise Dimethylamin, Trimethylamin, Diethylamin, Triethylamin, Di-n-propylamin, Tri-n-propylamin, Diisopropylamin, Triisopropylamin, Di-n-butylamin, Diisobutylamin, Tri-isobutylamin, Diisopentylamin, Diethanolamin, Triethanolamin, Dimethyl(2-chloroethyl)amin, Bis(2-chloroethyl)amin, Bis(2-ethylhexyl)amin, N-Methylstearylamin, Dialkylamine, N,N'-Dimethylethylendiamin, Permethyldiethylentriamin, Trimethylhexamethylendiamin, N,N-Dimethylaminoethanol, 2-(2-Diethylaminoethoxy)ethanol, Tris-[2-(2-hydroxy-ethoxy)-ethyl]amin, 3-Dimethylamino-1-propanol, 1-Diethylamino-2-propanol, Diisopropanolamin, Methyl-bis(2-hydroxypropyl)amin, Tris(2-hydroxypropyl)amin, 5-Diethylamino-2-pentanon, 3-Methylaminopropionsäurenitril, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-Methylanilin, N,N-Dimethylanilin, N,N-Diethylanilin, N,N-Di-propylanilin, Diphenylamin, N-Hydroxyethylanilin, Bis(N-hydroxyethyl)anilin, Dibenzylamin, Tribenzylamin, Methyldibenzylamin, N,N-Diisopropylanilin, N-Dodecylanilin, N-Methylaminonaphthalin, N,N-Dimethylaminonaphthalin, N,N-Dibenzylnaphthalin, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Dimorpholinethan, [2,2,2]-Diazabicyclooctan und N,N-Dimethyl-p-toluidin.

Es hat sich gezeigt, dass für die Zwecke der chemischen Befestigung, insbesondere für die chemische Befestigung von Verankerungsmitteln in Bohrlöchern, mittels radikalisch härtender Mörtelsysteme ein Härtersystem basierend auf Kupfer in Form von Salzen und Verbindungen, insbesondere Carboxylaten, Enamin und Saccharin ganz besonders bevorzugt ist, da mit ihnen, verglichen mit Härtersystemen, die andere, reaktivere Metalle, insbesondere Vanadium und Cobalt, beinhalten, Zusammensetzungen bereitgestellt werden können, die lagerstabil sind.

Das erfindungsgemäße Härtersystem enthält das Enamin in einer Menge von 30 bis 99,9 Gew.-%, bevorzugt von 40 bis 99 Gew.-%, besonders bevorzugt von 40 bis 95 Gew.-% und ganz besonders bevorzugt 50 bis 95 Gew.-%, jeweils bezogen auf das Gesamtgewicht des Härtersystems.

Soweit das Härtersystem einen metallbasierten Aktivator enthält, ist er in einer Menge von 0,001 bis 50 Gew.-%, bevorzugt von 0,05 bis 50 Gew.-% und besonders bevorzugt von 0,3 bis 40 Gew.-%, jeweils bezogen auf das Gesamtgewicht das Härter-Systems, enthalten.

Sofern das Härtersystem einen Co-Aktivator, wie z.B. Saccharin enthält, ist dieser in einer Menge von 0,01 bis 50 Gew.-%, bevorzugt von 0,1 bis 40 Gew.-% und besonders bevorzugt von 0,1 bis 30 Gew.-%, jeweils bezogen auf das Gesamtgewicht des Härter-Systems, enthalten.

Das erfindungsgemäße Härtersystem eignet sich als Initiator für die radikalische Polymerisation und damit für die Härtung von Reaktivharzsystemen auf Basis radikalisch härtender Verbindungen, sogenannten Reaktivharzen.

Mit dem erfindungsgemäßen Härtersystem lässt sich ein Reaktivharzsystem bereitstellen, welches neben dem erfindungsgemäßen Härtersystem ein Reaktivharz enthält und ferner als weitere Bestandteile Additive und Füllstoffe enthalten kann und welches peroxidfrei ist und somit eine weniger kritische und im besten Fall keine entsprechende Kennzeichnung mehr erforderlich macht. Dieses Reaktivharzsystem eignet sich besonders für die chemische Befestigung, insbesondere die chemische Befestigung von Verankerungsmitteln in Bohrlöchern, da sie höhere Lastwerte, auch in feuchten Bohrlöchern ermöglichen.

Somit ist ein weiterer Gegenstand der Erfindung die Verwendung des erfindungsgemäßen Härtersystems als peroxidfreies Initiatorsystem für ein Reaktivharzsystem mit radikalisch polymerisierbaren Verbindungen, insbesondere für die chemische Befestigung.

### Reaktivharzsystem

Ferner ist ein weiterer Gegenstand der Erfindung ein Reaktivharzsystem, welches das erfindungsgemäße Härtersystem, mindestens eine radikalisch polymerisierbare Verbindung, mindestens einen Reaktivverdünner und gegebenenfalls organische und/oder anorganischen Additive sowie Füllstoffe enthält.

Bevorzugt enthält das Reaktivharzsystem gelöst oder dispergiert im Reaktivharz den mindestens einen Aktivator und ggf. mindestens einen Co-Aktivator des Härtersystems. Geeignete Aktivatoren und Co-Aktivatoren sind oben als Bestandteile des Härtersystems beschrieben.

Das Reaktivharzsystem enthält im Härtersystem dabei das Enamin in einer Menge von 0,1 bis 30 Gew.-%, bevorzugt von 0,2 bis 25 Gew.-%, besonders bevorzugt von 0,5 bis 25 Gew.-% und ganz besonders bevorzugt 0,5 bis 20 Gew.-%, jeweils bezogen auf das Gesamtgewicht des Reaktivharzsystems.

Soweit das Reaktivharzsystem einen metallbasierten Aktivator enthält, ist er in einer Menge von 0,001 bis 10 Gew.-%, bevorzugt von 0,005 bis 5 Gew.-% und besonders bevorzugt von 0,01 bis 2 Gew.-%, jeweils bezogen auf das Gesamtgewicht des Reaktivharzsystems, enthalten.

Sofern das Reaktivharzsystem einen Co-Aktivator, wie z.B. Saccharin enthält, ist dieser in einer Menge von 0,001 bis 10 Gew.-%, bevorzugt von 0,05 bis 10 Gew.-% und besonders bevorzugt von 0,01 bis 3 Gew.-%, jeweils bezogen auf das Gesamtgewicht des Reaktivharzsystems, enthalten.

Das Reaktivharzsystem enthält wenigstens eine radikalisch polymerisierbare Verbindung als Reaktivharz.

Als radikalisch polymerisierbare Verbindungen, dem Reaktivharz, sind Verbindungen auf Urethan(meth)acrylatbasis, Verbindungen auf Epoxy(meth)acrylatbasis, Methacrylate von alkoxylierten Bisphenolen, Verbindungen auf Basis weiterer ethylenisch ungesättigter Verbindungen und Kombinationen davon geeignet, wie sie dem Fachmann bekannt sind.

Als Vinylesterharz besonders geeignet und bevorzugt sind (Meth)acrylat-funktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden. Ganz besonders geeignet und bevorzugt sind die in der DE 102011017 626 B4 beschriebenen Urethanmethacrylatharze (die auch als Vinylesterurethanharze bezeichnet werden).

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, genannt werden, worunter polymeres Diisocyanatodiphenylmethan (pMDI) ganz besonders bevorzugt ist.

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, und Neopentylglykol-mono(meth)acrylat geeignet. Bevorzugt sind Acryl- bzw. Methacrylsäurehydroxyalkylester, wie Hydroxyethyl(meth)acrylat, Hydroxypropyl(meth)acrylat, Polyoxyethylen(meth)acrylat, Polyoxypropylen(meth)acrylat. Besonders bevorzugt sind dabei die entsprechenden Methacrylate, da die sterische Hinderung gegenüber Acrylaten zu besserer Alkalistabilität führt.

Geeignet sind auch Verbindungen, die zumindest teilweise auf einer recyclierten Verbindung, inbesondere von (Meth)acrylsäureestern, basieren. Besonders bevorzugt ist ein (Meth)acrylsäureester, der aus recycliertem Methyl(meth)acrylat erhalten wird. Geeinget sind Verbindungen, wie hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, und Neopentylglykol-mono(meth)acrylat, bevorzugt Acryl- bzw. Methacrylsäurehydroxyalkylester, wie Hydroxyethyl(meth)acrylat, Hydroxypropyl(meth)acrylat, Polyoxyethylen(meth)acrylat und Polyoxypropylen(meth)acrylat, die jeweils aus recycliertem Methyl(meth)acrylat erhalten werden können.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglykol, Propandiol, Dipropylenglykol, andere Diole, wie 1,4-Butandiol, 1,6-Hexandiol, Neopentylglykol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylesterharz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Bevorzugte Vinylester-Harze sind (Meth)acrylat-funktionalisierte Harze und Harze, die durch Umsetzung eines Epoxid-Oligomers oder -Polymers mit Methacrylsäure oder Methacrylamid, bevorzugt mit Methacrylsäure, und gegebenfalls mit einem Kettenverlängerer, wie etwa Diethylenglykol oder Dipropylenglykol, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt.

Die Epoxy(meth)acrylatharze werden durch Umsetzung einer Epoxidgruppen aufweisenden organischen Verbindung mit Acrylsäure oder Methacrylsäure erhalten, so dass die Harze notwendigerweise Acryloxygruppen oder Methacryloxygruppen an den Molekülenden und Hydroxylgruppen in 2-Position zur gebildeten Acryloxy- bzw. Methacryloxygruppe (im Folgenden auch α-Hydroxylgruppen genannt) in der Hauptkette des Moleküls aufweisen. Zweckmäßig werden pro Epoxidäquivalent 0,7 bis 1,2 Carboxyläquivalente (Meth)acrylsäure eingesetzt. Die Epoxidgruppen aufweisenden organischen Verbindungen und die (Meth)acrylsäure werden dabei bevorzugt in etwa stöchiometrischen Verhältnissen eingesetzt, d.h. pro Epoxidäquivalent der organischen Verbindung wird etwa ein Äquivalent (Meth)acrylsäure eingesetzt. Die Umsetzung erfolgt in Gegenwart geeigneter, dem Fachmann hierfür bekannter Katalysatoren, wie quartären Ammoniumsalzen.

Zweckmäßig werden als Epoxidgruppen aufweisende organische Verbindungen solche mit einem Molekulargewicht eingesetzt, das einem Zahlenmittel der Molmasse *M̅ₙ* im Bereich von 129 bis 2.400 g/Mol entspricht und die im Mittel mindestens eine, bevorzugt 1,5 bis 2 Epoxidgruppen pro Molekül enthalten. Besonders bevorzugt sind die Epoxidgruppen vom Glycidylether- oder Glycidylestertyp, die durch Umsetzen eines Epihalohydrins, insbesondere Epichlorhydrin, mit einer mono- oder multifunktionellen aliphatischen oder aromatischen Hydroxyverbindungen, Thiolverbindungen oder Carbonsäuren oder einem Gemisch davon erhalten werden. Die erhaltene Epoxidgruppen aufweisende organische Verbindung weist eine Epoxidäquivalentmasse (EEW) bevorzugt im Bereich von 87 bis 1.600 g/Val, stärker bevorzugt im Bereich von 160 bis 800 g/Val und am stärksten bevorzugt im Bereich von 300 bis 600 g/Val auf.

Beispiele geeigneter Epoxidgruppen aufweisender Verbindungen sind Polyglycidylether mehrwertiger Phenole wie beispielsweise Brenzkatechin, Resorcin, Hydrochinon, 4,4'-Dihydroxydiphenylmethan, 2,2-(4,4'-Dihydroxydiphenyl)propan (Bisphenol-A), Bis(4-hydroxyphenyl)methan (Bisphenol F), 4,4'-Dihydroxydiphenylsulfon (Bisphenol S), 4,4'-Dihydroxydiphenylcyclohexan, Tris-(4-hydroxyphenyl)-methan, Novolaken (d.h. aus Umsetzungsprodukten von ein- oder mehrwertigen Phenolen mit Aldehyden, insbesondere Formaldehyd, in Gegenwart saurer Katalysatoren), wie Phenol-Novolak-Harz, Cresol-Novolak-Harz.

Weiter können folgende beispielhaft, jedoch nicht einschränkend, genannt werden: Glycidylether von Monoalkoholen, wie beispielsweise n-Butanol oder 2-Ethylhexanol; oder Glycidylether mehrwertiger Alkohole, wie beispielsweise aus 1,3-Butandiol, 1,4-Butandiol, 1,6-Hexandiol, Glycerin, Benzylalkohol, Neopentylglykol, Ethylenglykol, Cyclohexandimethanol, Trimethylolpropan, Pentaerythrit und Polyethylenglykolen, Triglycidylisocyanurat; Polyglycidylthioether mehrwertiger Thiole, wie Bismercaptomethylbenzol; oder Glycidylester von Monocarbonsäuren, wie Versaticsäure; oder Glycidylester mehrwertiger, aromatischer und aliphatischer Carbonsäuren, beispielsweise Phthalsäurediglycidylester, Isophthalsäurediglycidylester, Terephthalsäurediglycidylester, Tetrahydrophthalsäurediglycidylester, Adipinsäurediglycidylester und Hexahydrophthalsäurediglycidylester.

Als Epoxidgruppen aufweisende organische Verbindungen sind Diglycidylether zweiwertiger Hydroxyverbindungen der allgemeinen Formel (VI) besonders bevorzugt

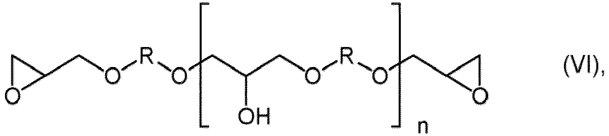

in der R eine unsubstituierte oder substituierte aliphatische oder aromatische Gruppe, bevorzugt eine aromatische Gruppe, stärker bevorzugt eine aromatische Gruppe mit 6 bis 24 Kohlenstoffatomen ist und der Mittelwert für n gleich 0 bis 3 ist. R ist besonders bevorzugt eine Gruppe vom Bisphenoltyp, wie Bisphenol A, Bisphenol F oder Bisphenol S, oder vom Novolaktyp, wobei eine Gruppe vom Bisphenoltyp ganz besonders bevorzugt ist. Der Mittelwert für n ist bevorzugt etwa 0,1, etwa 1 oder etwa 2. Dabei werden im Sinne der vorliegenden Erfindung Verbindungen, in denen n - 0,1 ist, als monomer und Verbindungen, in denen n ~ 1 oder 2 ist, als polymer bezeichnet.

Die polymeren Verbindungen haben gegenüber den monomeren Verbindungen den Vorteil, dass der Reaktivharzgehalt in der Reaktivharzzusammensetzung deutlich reduziert werden kann, was die Reaktivharzzusammensetzung wirtschaftlicher in der Herstellung macht, da hierdurch die Herstellungskosten reduziert werden können.

Im Sinne der Erfindung sind Vinylesterharze Oligomere oder Polymere mit mindestens einer (Meth)acrylat-Endgruppe, so genannte (Meth)acrylat-funktionalisierte Harze, wozu vor allem Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt. In diesem Zusammenhang wird auf die Anmeldung US 2011/071234 verwiesen.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser polymerisierbaren Bestandteile.

Beispiele für derartige Epoxy(meth)acrylate sind solche der Formel (V) 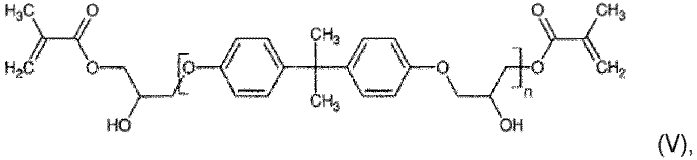 worin n für eine Zahl grösser oder gleich 1 steht (wenn Gemische verschiedener Moleküle mit unterschiedlichen n-Werten vorliegen und durch die Formel (V) repräsentiert werden, sind auch nicht-ganzzahlige Zahlen als Mittelwert möglich).

Weitere Beispiele für die propoxylierten oder insbesondere ethoxylierten aromatischen Diol-, wie Bisphenol-A-, Bisphenol-F- oder Novolak- (insbesondere di-)(meth)acrylate sind solche der Formel (VI) 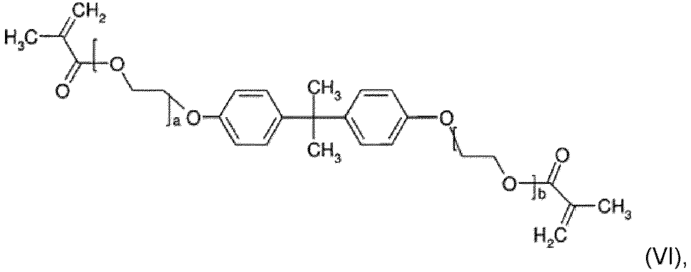 worin a und b jeweils unabhängig voneinander für eine Zahl grösser oder gleich 0 stehen mit der Maßgabe, dass vorzugsweise mindestens einer der Werte grösser als 0 ist, vorzugsweise beide 1 oder grösser sind (wenn Gemische verschiedener Moleküle mit unterschiedlichen (a und b)-Werten vorliegen und durch die Formel (VI) repräsentiert werden, sind auch nicht-ganzzahlige Zahlen als Mittelwert möglich).

Ganz besonders geeignet sind die bekannten Reaktionsprodukte aus Di- oder Polyisocyanaten und Hydroxyalkylmethylacrylaten, wie sie beispielsweise in der DE 2312559 A1 beschrieben sind, Addukte aus (Di)Isocyanaten und 2,2-Propanbis-[3-(4-phenoxy)-1,2-hydroxypropan-1-methacrylat] nach der US-PS 3 629 187 sowie die Addukte aus Isocyanaten und Methacryloylalkylethern, -alkoxybenzolen bzw. -alkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen. Selbstverständlich können auch Gemische aus geeigneten Monomeren verwendet werden.

All diese Harze, die erfindungsgemäß bevorzugt verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Reaktivharz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

Das Reaktivharzsystem kann geeignete Reaktivverdünner enthalten, wie sie in den Anmeldungen EP 1 935 860 A1 und DE 195 31 649 A1 beschrieben sind. Vorzugsweise enthält die Reaktivharzzusammensetzung als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: 2-, 3-Hydroxypropyl(meth)acrylat (HP(M)A), 1,3-Propandioldi(meth)acrylat, 1,3-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, *N,N*-Dimethylaminoethyl(meth)acrylat, *N*,*N-*Dimethylaminomethyl(meth)acrylat, Acetoacetoxyethyl(meth)acrylat, Isobornyl(meth)acrylat, 2-Ethylhexyl(meth)acrylat, Methoxypolyethylenglykol-mono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, und Decalyl-2-(meth)acrylat; Glycerolformal(meth)acrylat; Solketal(meth)acrylat, Cyclohexyl(meth)acrylat, Phenoxyethyldi(meth)acrylat, Methoxyethyl(meth)acrylat, *tert-*Butyl(meth)acrylat und Norbornyl(meth)acrylat. Methacrylate sind gegenüber Acrylaten bevorzugt. Besonders bevorzugt sind 2- und 3-Hydroxypropylmethacrylat (HPMA), 1,2-Ethandioldimethacrylat, 1,4-Butandioldimethacrylat (BDDMA), 1,3-Butandioldimethacrylat, Trimethylolpropantrimethacrylat, Acetoacetoxyethylmethacrylat, Isobornylmethacrylat, Bisphenol-A-methacrylat, Trimethylcyclohexylmethacrylat, 2-Hydroxyethylmethacrylat, PEG200- oder PEG400-dimethacrylat und Norbornylmethacrylat. Ganz besonders bevorzugt sind 1,4-Butandioldimethacrylat und ein Gemisch aus 2- und 3-Hydroxypropylmethacrylat (HPMA), oder eine Mischung aus diesen drei Methacrylaten. Am bevorzugtesten ist ein Gemisch aus 2- und 3-Hydroxypropylmethacrylat (HPMA). Grundsätzlich können auch andere übliche radikalisch polymerisierbare Verbindungen, allein oder im Gemisch mit den (Meth)acrylsäureestern, als Reaktivverdünner eingesetzt werden, z. B. Styrol, α-Methylstyrol, alkylierte Styrole, wie *tert*-Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglykoldivinylether, 1,4-Butandioldivinylether, Trimethylolpropandivinylether, Trimethylolpropantrivinylether, Mono-, Di-, Tri-, Tetra- und Polyalkylenglykolvinylether, Mono-, Di-, Tri-, Tetra- und Polyalkylenglykolallylether, Adipinsäuredivinylester, Trimethylolpropandiallylether und Trimethylolpropantriallylether.

Die Reaktivverdünner sind bevorzugt in einer Menge bis etwa 80 Gew.-%, besonders bevorzugt von etwa 10 bis etwa 60 Gew.-%, noch bevorzugter von etwa 30 bis etwa 60 Gew.-%, bezogen auf das Reaktivharz vorhanden.

Sowohl zur Stabilisierung des Reaktivharzes oder der das Reaktivharz enthaltenden Reaktivharzzusammensetzung als auch zur Einstellung der Harzreaktivität können im erfindungsgemäßen Reaktivharzsystem ein oder mehrere Inhibitoren vorhanden sein.

Hierfür sind die für radikalisch polymerisierbare Verbindungen üblicherweise verwendeten Inhibitoren geeignet, wie sie dem Fachmann bekannt sind. Bevorzugt sind diese Inhibitoren unter nicht-phenolischen Inhibitoren, insbesondere Phenothiazinen, ausgewählt.

Als nicht-phenolische Inhibitoren kommen vorzugsweise Phenothiazine, wie Phenothiazin und/oder Derivate oder Kombinationen davon, oder stabile organische Radikale, wie etwa Galvinoxyl- und *N*-Oxyl-Radikale, insbesondere vom Piperidinyl-*N-*oxyl- oder Tetrahydropyrrol-*N*-oxyl-Typ, in Betracht, wie Aluminium-*N-*nitrosophenylhydroxylamin, Diethylhydroxylamin, Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, 4-Hydroxy-TEMPO, (TEMPOL), 4-Acetyl-TEMPO, TEMPO und dergleichen.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Als stabile *N*-Oxyl-Radikale können beispielsweise solche verwendet werden, wie sie in der DE 199 56 509 A1 und der DE 195 31 649 A1 beschrieben sind. Derartige stabile Nitroxylradikale sind vom Typ Piperidinyl-*N*-oxyl oder Tetrahydropyrrol-*N*-oxyl oder eine Mischung daraus.

Bevorzugte stabile Nitroxylradikale sind ausgewählt aus der Gruppe bestehend aus 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet) und Mischungen aus zwei oder mehreren dieser Verbindungen, wobei 1-Oxyl-2,2,6,6-tetramethylpiperidin-4-ol (TEMPOL) besonders bevorzugt ist.

Bevorzugt sind der oder die Inhibitoren ausgewählt aus der Gruppe bestehend aus N-Oxyl-Radikalen, Catecholen, Catecholderivaten und Phenothiazinen und ein Gemisch von zwei oder mehreren davon. Besonders bevorzugt sind der oder die Inhibitoren ausgewählt aus der Gruppe bestehend aus Tempol, Catecholen und Phenothiazinen. Ganz besonders bevorzugt sind die in den Beispielen verwendeten Inhibitoren, bevorzugt etwa in den in den Beispielen angegebenen Mengen.

Die Inhibitoren können, abhängig von den gewünschten Eigenschaften des Reaktivharzes, entweder allein oder als Kombination von zweien oder mehreren davon verwendet werden. Die Kombination von phenolischen und nicht-phenolischen Inhibitoren ist bevorzugt.

Der Inhibitor oder die Inhibitormischung wird in der Fachwelt bekannten üblichen Mengen zugesetzt oder ist bereits in den verwendeten Rohstoffen enthalten, bevorzugt in einer Menge von etwa 0,0005 bis etwa 2 Gew.-%, stärker bevorzugt von etwa 0,001 bis etwa 1 Gew.-%, noch stärker bevorzugt von etwa 0,005 bis etwa 0,5 Gew.-%, jeweils bezogen auf das Reaktivharz.

Das Reaktivharzsystem kann für die chemische Befestigung übliche Füllstoffe und/oder Additive enthalten. Es sei darauf hingewiesen, dass einige Stoffe sowohl als Füllstoff und, ggf. in modifizierter Form, auch als Additiv verwendet werden können. Beispielsweise dient pyrogene Kieselsäure in ihrer polaren, nicht nachbehandelten Form eher als Füllstoff und in ihrer apolaren, nachbehandelten Form eher als Additiv. In Fällen, in denen genau derselbe Stoff als Füllstoff oder Additiv verwendet werden kann, soll seine Gesamtmenge die hierin festgelegte Obergrenze für Füllstoffe vorteilhafterweise nicht überschreiten.

Zur Formulierung des erfindungsgemäßen Reaktivharzsystems können übliche Füllstoffe verwendet werden, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure, insbesondere polare, nicht nachbehandelte pyrogene Kieselsäure), Silikate, Aluminiumoxide (z.B. Tonerde), Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Aluminatzement (oft auch als Tonerdezement bezeichnet) oder Portlandzement), Metalle, wie Aluminium, Ruß, ferner Holz, mineralische oder organische Fasern, oder dergleichen, oder Gemische von zwei oder mehr davon Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von etwa 10 mm und einen Minimaldurchmesser von etwa 1 nm. Das heißt, der Durchmesser ist etwa 10 mm oder irgendein Wert von weniger als etwa 10 mm, aber mehr als etwa 1 nm. Bevorzugt ist der maximale Durchmesser ein Durchmesser von etwa 5 mm, bevorzugter von etwa 3 mm, noch bevorzugter von etwa 0,7 mm. Ganz besonders bevorzugt ist ein maximaler Durchmesser von etwa 0,5 mm. Der bevorzugtere Minimaldurchmesser ist etwa 10 nm, noch bevorzugter etwa 50 nm, ganz besonders bevorzugt etwa 100 nm. Durchmesserbereiche, die sich durch Kombination dieser maximalen Durchmesser und Minimaldurchmesser ergeben, sind besonders bevorzugt. Bevorzugt und deutlicher verstärkend wirken sich jedoch die globulären, inerten Stoffe (Kugelform) aus. Auch Core-Shell-Partikel, bevorzugt in Kugelform, können als Füllstoffe verwendet werden.

Bevorzugte Füllstoffe sind ausgewählt aus der Gruppe bestehend aus Zement, Kieselsäure, Quarz, Quarzsand, Quarzmehl, und Mischungen aus zwei oder mehreren davon. Für die Zwecke der chemischen Befestigung besonders bevorzugt sind Füllstoffe ausgewählt aus der Gruppe bestehend aus Zement, pyrogener Kieselsäure, insbesondere unbehandelter, polarer pyrogener Kieselsäure, Quarzsand, Quarzmehl, und Mischungen aus zwei oder mehreren davon.

Geeignet ist auch die Verwendung mindestens eines pulverisierten Recyclingmaterials gemäß der bisher unveröffentlichten Europäischen Patentanmeldung EP 21 207137.7 (Anmeldetag 09.11.2021) als Füllstoff.

Weitere denkbare Zusätze sind ferner Rheologieadditive, wie gegebenenfalls organisch oder anorganisch nachbehandelte pyrogene Kieselsäure (falls sie nicht schon als Füllstoff verwendet wird), insbesondere apolar nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Ferner können Mittel zur Regulierung des pH-Wertes, wie anorganische und/oder organische Säuren gemäß DE 102010008971 A1, insbesondere Copolymere mit sauren Gruppen, z.B. Estern der Phosphorsäure, eingesetzt werden. Auch nicht reaktive Verdünnungsmittel (Lösungsmittel) können, vorzugsweise in einer Menge bis zu 30 Gew.-%, bezogen auf die jeweilige Komponente (Reaktivharzmörtel, Härter), beispielsweise von 1 bis 20 Gew.-%, vorliegen, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, oder Wasser, oder Glykole. Darüber hinaus können auch Mittel zur Verbesserung der Verträglichkeit zwischen Harz- und Härterkomponente, wie ionische, nichtionische oder amphotere Tenside; Seifen, Netzmittel, Detergenzien; Polyalkylenglykolether; Salze von Fettsäuren, Mono- oder Diglyceride von Fettsäuren, Zuckerglyceride, Lecithin; Alkansulfonate, Alkylbenzolsulfonate, Fettalkoholsulfate, Fettalkoholpolyglykolether, Fettalkoholethersulfate, sulfonierte Fettsäuremethylester; Fettalkoholcarboxylate; Alkylpolyglycoside, Sorbitanester, N-Methylglucamide, Saccharoseester; Alkylphenole, Alkylphenolpolyglykolether, Alkylphenolcarboxylate; quartäre Ammoniumverbindungen, Esterquats, Carboxylate quartärer Ammoniumverbindungen, verwendet werden.

In einer Ausführungsform kann das Reaktivharzsystem zusätzlich einen Haftvermittler enthalten. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung einer Dübelmasse z.B. in mit einem Diamantbohrer gebohrten Bohrlöchern von Bedeutung und erhöht die Versagensverbundspannung. Geeignete Haftvermittler sind aus der Gruppe der Silane, die mit weiteren reaktiven organischen Gruppen funktionalisiert sind und in das Polymernetzwerk eingebunden werden können, ausgewählt. Diese Gruppe umfasst z.B. 3-(Meth)acryloyloxypropyltrimethoxysilan, 3-(Meth)acryloyloxypropyltriethoxysilan, 3-(Meth)acryloyloxymethyltrimethoxysilan, 3-(Meth)acryloyloxymethyltriethoxysilan, Vinyltrimethoxysilan, Vinyltriethoxysilan, funktionalisiertes Tetraethoxysilan, funktionalisiertes Tetramethoxysilan, funktionalisiertes Tetrapropoxysilan, funktionalisiertes Ethyl- oder Propylpolysilikat, und Gemische von zwei oder mehr davon. In dieser Hinsicht wird Bezug genommen auf die Anmeldung DE 10 2009 059210.

In einer besonders bevorzugten Ausführungsform sind die Bestandteile des Reaktivharzsystems eines oder mehrere der Bestandteile, welche in den erfindungsgemäßen Beispielen genannt werden. Ganz besonders bevorzugt sind Reaktivharz- und/oder Härterzusammensetzungen, welche dieselben Bestandteile enthalten oder aus denselben Bestandteilen bestehen, wie sie in den einzelnen erfindungsgemäßen Beispielen genannt werden, und zwar bevorzugt in etwa in den dort genannten Anteilen.

### Mehrkomponenten-Reaktivharzsystem

Das erfindungsgemäße Reaktivharzsystem liegt bevorzugt als ein Mehrkomponenten-Reaktivharzsystem, wobei hiervon auch ein Zweikomponenten-Reaktivharzsystem umfasst ist, vor. Unter einem Mehrkomponenten-System ist insbesondere ein Zweikomponenten-System zu verstehen, worin die miteinander reaktionsfähigen Bestandteile so beinhaltet sind, dass sie während der Lagerung nicht zu unerwünschten Reaktionen führen können. Bei einem Zweikomponenten-System bedeutet dies beispielsweise, dass das System eine Zweikammervorrichtung ist, die Komponenten (Reaktivharzkomponente und Härterkomponente) also in räumlich voneinander getrennten Kammern vorliegen.

Ein weiterer Gegenstand der Erfindung ist somit ein Mehrkomponenten-Reaktivharzsystem, welches das erfindungsgemäße Reaktivharzsystem enthält, wobei die Bestandteile des Reaktivharzsystems derart auf die Komponenten aufgeteilt sind, dass sie nicht miteinander reagieren. Erst wenn die Komponenten gemischt werden, reagieren die Bestandteile, so dass das Reaktivharz aushärtet. Das bedeutet, dass die Bestandteile des erfindungsgemäßen Härtersystems auf unterschiedliche Komponenten aufgeteilt sind.

Das bevorzugte Zweikomponenten-Reaktivharzsystem besteht aus einer Reaktivharzkomponente (auch Reaktivharz-Zusammensetzung) und einer Härterkomponente (auch Härter-Zusammensetzung).

Die Reaktivharzkomponente umfasst dabei ein Reaktivharz, einen Reaktivverdünner, gegebenenfalls einen Aktivator und gegebenenfalls einen Co-Aktivator. Es können jeweils ein oder mehrere der Bestandteile enthalten sein. Ferner kann die Reaktivharzkomponente anorganische und/oder organische Additive sowie Füllstoffe umfassen.

Daher umfasst die Reaktivharzkomponente in einer bevorzugten Ausführungsform ein Reaktivharz, mindestens einen Reaktivverdünner, einen Aktivator, gegebenenfalls einen Co-Aktivator und anorganische und/oder organische Additive sowie Füllstoffe.

Soweit das Härtersystem und damit das Mehrkomponenten-Reaktivharzsystem einen metallbasierten Aktivator enthält, ist er in einer Menge von 0,001 bis 10 Gew.-%, bevorzugt von 0,01 bis 5 Gew.-% und besonders bevorzugt von 0,05 bis 2 Gew.-%, jeweils bezogen auf das Gesamtgewicht der Reaktivharzkomponente, enthalten.

Sofern das Härtersystem einen Co-Aktivator, wie z.B. Saccharin enthält, ist dieser in einer Menge von 0,01 bis 10 Gew.-%, bevorzugt von 0,01 bis 5 Gew.-% und besonders bevorzugt von 0,1 bis 5 Gew.-%, jeweils bezogen auf das Gesamtgewicht der Reaktivharzkomponente, enthalten.

Die Härterkomponente umfasst dabei ein Enamin, gegebenenfalls mindestens einen Aktivator und gegebenenfalls mindestens einen Co-Aktivator. Ferner kann die Härterkomponente mindestens einen reaktiven oder nicht-reaktiven Verdünner, anorganische und/oder organische Additive sowie Füllstoffe umfassen.

Der mindestens eine Aktivator kann in der Härterkomponente und/oder der Reaktivharzkomponente enthalten sein. Bevorzugt ist er jedoch in der Reaktivharzkomponente enthalten, um die Lagerstabilität des Mehrkomponenten-Reaktivharzsystems zu erhöhen.

Der mindestens eine Co-Aktivator kann in der Härterkomponente und/oder der Reaktivharzkomponente enthalten sein. Bevorzugt ist er jedoch in der Härterkomponente enthalten, um die Lagerstabilität des Mehrkomponenten-Reaktivharzsystems zu erhöhen.

Die Bestandteile der Reaktivharzkomponente und der Härterkomponenten des erfindungsgemäßen Mehrkomponenten-Reaktivharzsystems sind wie oben beschrieben.

Weiterhin kann die Härterkomponente mindestens einen reaktiven oder nicht-reaktiven Verdünner enthalten. Geeignete nicht-reaktive Verdünner sind flüssige, organische Substanzen, die keine ethylenisch ungesättigten Doppelbindungen enthalten; typischerweise, aber nicht ausschließlich Ether oder Ester; bevorzugt niedrigviskose und hochsiedende Substanzen mit einer Viskosität kleiner als 2000 mPas und einem Siedepunkt über 80°C.

Bevorzugt sind die nicht-reaktiven Verdünner Diester von bifunktionalen Carbonsäuren, wie Adipate oder (auch hydrierte) Phthalate. Ebenso geeignet sind Benzoate oder Ester anorganischer Säuren, wie organische Phosphate. Weiterhin bevorzugt sind flüssige Polyalkylenglycole geeigneter Kettenlänge (Polyethylenglycole, Polypropolenglycole sowie gemischte Polyalkylenglycole oder Mischungen derselben), die an den Kettenenden OH-Gruppen tragen oder verethert bzw. verestert sind.

Bevorzugt sind Dialkyladipate, Dialkylmaleate oder Dialkylsuccinate sowie Di- oder Trialkylcitrate oder ggf. hydrierte Dialkylphthalate; z.B. 1,2-Cyclohexandicarbonsäurediisononylester (DINCH) oder Mischungen dieser oder anderer Weichmacher.

Weiterhin bevorzugt sind reaktive Verdünnungsmittel, die in EP 1352002 A1 genannt sind.

Weiter bevorzugt sind reaktive Verdünnungsmittel, die ethylenisch ungesättigte Doppelbindungen enthalten. Beispiele dafür sind (Meth)acrylsäureestern, Styrol, α-Methylstyrol, alkylierte Styrole, wie tert-Butylstyrol, Divinylbenzol und Vinyl- sowie Allylverbindungen, wobei die nicht kennzeichnungspflichtigen Vertreter davon bevorzugt sind.

Besonders bevorzugt sind nicht radikalisch homopolymerisierbare Reaktivverdünner, wie Vinyl- oder Allylverbindungen. Beispiele für diese besonders bevorzugten Reaktivverdünner sind Hydroxybutylvinylether, Ethylenglykoldivinylether, 1,4-Butandioldivinylether, Trimethylolpropandivinylether, Trimethylolpropantrivinylether, Mono-, Di-, Tri-, Tetra- und Polyalkylenglykolvinylether, Mono-, Di-, Tri-, Tetra- und Polyalkylenglykolallylether, die an den Kettenenden OH-Gruppen tragen oder verethert bzw. verestert sind, Adipinsäuredivinylester, Trimethylolpropandiallylether und Trimethylolpropantriallylether sowie Mischungen solcher Substanzen untereinander oder mit nicht-reaktiven Verdünnern.

Der Anteil des Reaktivharzes in der Reaktivharzkomponente beträgt bevorzugt von etwa 10 bis etwa 70 Gew.-%, stärker bevorzugt von etwa 10 bis etwa 60 Gew.-%, noch stärker bevorzugt von etwa 10 bis etwa 40 Gew.-%, bezogen auf die Reaktivharzkomponente.

Der oder die Reaktivverdünner sind bevorzugt in einer Menge bis etwa 70 Gew.-%, besonders bevorzugt von etwa 5 bis etwa 60 Gew.-%, noch bevorzugter von etwa 10 bis etwa 50 Gew.-%, bezogen auf die Reaktivharzkomponente, im Reaktivharz vorhanden.

Der Haftvermittler ist zweckmäßig in Mengen von etwa 1 bis etwa 10 Gew.-% bezogen auf das Gesamtgewicht der Reaktivharzkomponente enthalten.

Der Anteil des Enamins in der Härterkomponente beträgt bevorzugt von etwa 1 bis etwa 70 Gew.-%, stärker bevorzugt von etwa 2 bis etwa 50 Gew.-%, noch stärker bevorzugt von etwa 5 bis etwa 30 Gew.-%, bezogen auf das Gesamtgewicht der Härterkomponente.

Soweit das Härtersystem und damit das Mehrkomponenten-Reaktivharzsystem einen metallbasierten Aktivator enthält, ist er in einer Menge von 0,01 bis 10 Gew.-%, bevorzugt von 0,1 bis 5 Gew.-% und besonders bevorzugt von 0,2 bis 2 Gew.-%, jeweils bezogen auf das Gesamtgewicht der Härterzusammensetzung, enthalten.

Sofern das Härtersystem einen Co-Aktivator, z.B. Saccharin enthält, ist dieser in einer Menge von 0,01 bis 20 Gew.-%, bevorzugt von 0,1 bis 10 Gew.-% und besonders bevorzugt von 0,5 bis 10 Gew.-%, jeweils bezogen auf das Gesamtgewicht der Härterzusammensetzung, enthalten.

Der Anteil des mindestens einen reaktiven oder nicht-reaktiven Verdünners in der Härterkomponente beträgt bevorzugt von etwa 5 bis etwa 70 Gew.-%, stärker bevorzugt von etwa 10 bis etwa 50 Gew.-%, noch stärker bevorzugt von etwa 20 bis etwa 50 Gew.-%, bezogen auf die das Gesamtgewicht der Härterkomponente.

Es ist auch möglich, das Reaktivharzsystem auf drei oder mehr Komponenten aufzuteilen. In diesem Fall ergibt sich ein Mehrkomponenten-Reaktivharzsystem.

Das Mischungsverhältnis von Reaktivharz- und Härterkomponente liegt im Bereich von 1:1 bis 20:1 bezogen auf das Volumen der Komponenten. Bevorzugt handelt es sich um Mischungsverhältnisse zwischen 3:1 und 10:1, besonders bevorzugt sind Mischungsverhältnisse von 5:1 bis 10:1.

Das erfindungsgemäße Mehrkomponenten-Reaktivharzsystem kann in Form eines Patronen-Systems, eines Kartuschen-Systems oder eines Folienbeutel-Systems vorliegen. Bei der bestimmungsgemäßen Verwendung des Systems werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen, in das mit dem aushärtenden Reaktivharz beschickte Bohrloch eingebracht und entsprechend justiert werden.

Das erfindungsgemäße Reaktivharzsystem findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eignet es sich zur chemischen Befestigung von Verankerungsmitteln, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen.

Das erfindungsgemäße Reaktivharzsystem wird insbesondere zur Befestigung von Verankerungsmitteln in Bohrlöchern verschiedenen Untergrunds und zum baulichen Kleben verwendet. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen. Bevorzugt hat das Stahl-Bohrloch Rillen.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

### AUSFÜHRUNGSBEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %-Angaben beziehen sich auf das Gesamtgewicht der beschriebenen Zusammensetzung als Kalkulationsbasis, soweit nicht anders angegeben.

**Tabelle 1: In den Reaktivharzkomponenten (A) verwendete Rohstoffe**

| | **Beschreibung** |
|---|---|
| Urethanmethacrylat | Urethanmethacrylat-Harz gemäß WO2019/007667, Vergleichsbeispiel C1 |
| | Das Harz wurde als Masterbatch in Abmischung mit PEG-200DMA im Massenverhältnis 35/65 (35,75/64,25) hergestellt und weiterverwendet. |
| 1,4-BDDMA | 1,4-Butandioldimethacrylat; Handelsname: Visiomer 1,4-BDDMA (Fa. Evonik) |
| TPGDMA | Tripropylenglycoldimethacrylat, Fa. Evonik |
| TCDDMA | Tricyclodecanedimethanoldimethacrylate, Handelsname: SR 834 (Fa. Sartomer) |
| PEG200DMA | Polyethylenglykol(200)Dimethacrylat; |
| | Handelsname: Visiomer PEG200DMA (Fa. Evonik) |
| PEG400DMA | Polyethylenglykol(400)Dimethacrylat; Handelsname: Bisomer PEG400DMA (Fa. GEO) |
| MEMO | 3-Methacryloxypropyltrimethoxysilan; Dynasylan MEMO; Evonik |
| Morpholin | Tetrahydro-1,4-oxazin (Fa. SigmaAldrich) |
| Piperazin | 1,4-Diazacyclohexan (Fa. SigmaAldrich) |
| Polyalkylenglycoldiamin | O,O'-Bis-(2-aminopropyl)-polypropylenglykol-block-polyethylenglykol-block-polypropylenglykol-500 (Fa. SigmaAldrich) |
| Isobutyraldehyd | Isobutyraldehyd (Fa. SigmaAldrich) |
| Glutaraldehyd | Pentan-1,5,-dial (50% (SigmaAldrich) |
| Glyoxal | Etandial 50% (Fa. SigmaAldrich) |
| Aceton | Propanon (Fa. Roth) |
| 1-Morpholino-cyclohexen | 1-Morpholino-cyclohexen (Fa. TCI Europe) |
| Diethyladipat | Diethyladipat (Fa. TCI Europe) |
| DINCH | Hexamoll DINCH (Fa. BASF) |
| Triethylcitrat | Triethylcitrat (Fa. Thermo Fisher) |
| Mn(acac)₂ | Mangan(II)acetylacetonat (Fa. SigmaAldrich) |
| Mn(acac)₃ | Mangan(III)acetylacetonat (Fa. SigmaAldrich) |
| Cu(acac)₂ | Kupfer(II)acetylacetonat (Fa. SigmaAldrich) |
| Kupfer(II)octanoat | Kupfer(II)ethylhexanoat (Fa. SigmaAldrich) |
| Octa-Soligen^{®} Manganese 10HS | Mangansalz-Lösung (Fa. OMG, Borchers) |
| Octa-Soligen^{®} Iron 7/8 | Eisensalz-Lösung (Fa. OMG, Borchers) |
| Borchers^{®} VP 0132 | Vanadiumsalz-Lösung (Fa. OMG, Borchers) |
| TIB Kat^{®} 808 | Kupfernaphtenat-Lösung (Fa. TIB Chemicals) |
| Borchers^{®} Deca Copper 8 | Kupferdecanoat-Lösung (Fa. OMG, Borchers) |
| Saccharin | o-Benzoesulfimid (Fa. SigmaAldrich) |
| Phthalimid | 1,3-Dihydro-1,3-dioxoisoindol (Fa. SigmaAldrich) |
| MEHQ | 4-Methoxyphenol (Fa. SigmaAldrich) |
| Me-Catechol | 4-Methylcatechol (Fa. TCI Europe) |
| Triphenylphosphit | Phosphorigsäure-triphenylester (Fa. SigmaAldrich) |
| BzThioharnstoff | Benzylthioharnstoff (Fa. TCI Europe) |
| Irgacure^{®} 1173 | 2-Hydroxy-2-Methyl-Phenyl-Propane-1-one (Fa. Ciba) |
| TEMED | N,N,N',N'-Tetramethyldiamin (Fa. SigmaAldrich) |
| Vestamin^{®} A139 | Blocked crosslinker for polyisocyanate auf Basis von cycloaliphatischen diaminen |
| PEG-Diimin | Kondensationsprodukt aus Polyakylenglycoldiamin (Jeffamine ED600) und Isobutyraldehyd gemäß WO22002567A1 |
| Tempol | 4-Hydroxy-2,2,6,6-tetramethylpiperidinyloxyl; |
| | Handelsname: 4-Hydroxy-TEMPO (Fa. BASF) |
| Cab-o-Sil^{®} TS720 | Hydrophobisierte, pyrogene, Kieselsäure (Fa. Cabot) |
| Quarzsand F32 | Quarzsand (Fa. Quarzwerke Frechen) |
| Millisil^{®} W12 | Quarzmehl (Fa. Quarzwerke Frechen) |
| TERNAL^{®} white | Calciumaluminatzement (Fa. Imerys SA) |
| BYK-P 105 | Niedermolekulares, ungesättigtes Polycarbonsäurepolymer (Fa. BYK-Chemie GmbH) |
| BYK-378 | Polyethermodifiziertes Polydimethylsiloxan (Fa. BYK- Chemie GmbH) |

### Herstellung der Enamine

Abhängig von der Konsistenz der Rohstoffe wurde die Kondensation entweder in Substanz oder in wässriger Lösung durchgeführt.

### Beispiel Morpholin/Isobutyraldehyd

8,7g Morpholin wurden vorgelegt und portionsweise unter Rühren 7,2g Isobutyraldehyd zugegeben. Die Zugabegeschwindigkeit darf dabei nicht zu hoch sein, um zu starke Wärmeentwicklung zu vermeiden. Über Nacht wurde die Reaktionsmischung nachgerührt. Das gebildete Wasser verblieb in diesem Fall im gebildeten Enamin.

### Beispiel Piperazin/Isobutyraldehyd

43g Piperazin wurden bei ca. 50°C in 50g Wasser gelöst und bei dieser Temperatur langsam 72g Isobutyraldehyd zugegeben. Unter Rühren wurde die Temperatur auf 80°C und zwei Stunden lang gehalten. Nach dem Abkühlen wurde die organische Phase (Enamin) im Scheidetrichter von der wässrigen getrennt und für Härtungsversuche verwendet.

Weitere Enamine (Diethanolamin/Isobutyraldehyd; Morpholin/Glutaraldehyd; Piperazin/Glyoxalaldehyd) wurden analog hergestellt. In Abhängigkeit von der Reaktivität der Edukte muss dabei ggf. länger geheizt werden. Es ist sinnvoll aber oftmals nicht notwendig, das gebildete Wasser - beispielsweise durch azeotrope Destillation über einen Wasserabscheider- aus der organischen Phase abzutrennen. In diesem Fall wurde das Aldehyd im Überschuss zugegeben und nach Abschluss der Reaktion abdestilliert.

### Durchführung der Härtungsversuche

Zum Test der Eignung von Bestandteilen des Initiatorsystems wurden einige Gramm einer Harzmischung (Urethanmethacrylat mit Reaktivverdünnern) in einem Rollrandgläschen vorgelegt, Metallsalz (fest oder in Lösung) zugegeben und auf dem Magnetrührer homogenisiert. Bei Verwendung nicht vorgelöster Harze wurde dabei auf ca. 50°C geheizt und ggf. unvollständig gelöster Rückstand im Harz belassen. Nach dem Abkühlen auf Raumtemperatur wurden ggf. die in Tabelle 2 angegebenen Zusatzstoffe sowie das Enamin zugegeben, das Gläschen verschlossen und geschüttelt. Ca. alle 5 min wurde die Konsistenz des Inhaltes kontrolliert und die Zeit bis zur Verfestigung t(Gel) notiert. Die Ergebnisse sind in den Tabellen 2 bis 5 gezeigt.

Soweit im Harz wenig lösliche Reaktionspartner (wie Saccharin) verwendet wurden, wurde das Harz mit wenig Kieselsäure (Cab-O-Sil^{®} TS720) verdickt, um das Absetzen zu verhindern.

Aus den in Tabelle 2 gezeigten Ergebnissen wird deutlich, dass Enamine grundsätzlich als Härter für Methacrylate geeignet sind. Ohne zusätzliche Co-Aktivatoren sind dabei jedoch Metallverbindungen mit hohem Redoxpotential erforderlich.

Aus den in Tabelle 3 gezeigten Ergebnissen geht hervor, dass verschiedene Co-Aktivatoren geeignet sind, die Initiierung der Polymerisation auch Metallen mit niedrigem Redoxpotential zu ermöglichen.

Tabelle 4 zeigt, dass verschiedene Metallverbindungen verwendet werden können, um mit einem geeigneten Co-Aktivator die Härtung durch Enamine zu gewährleisten.

Aus den in Tabelle 5 gezeigten Ergebnissen wird ersichtlich, dass verschiedene Enamine geeignet sind, als Härter verwendet zu werden.

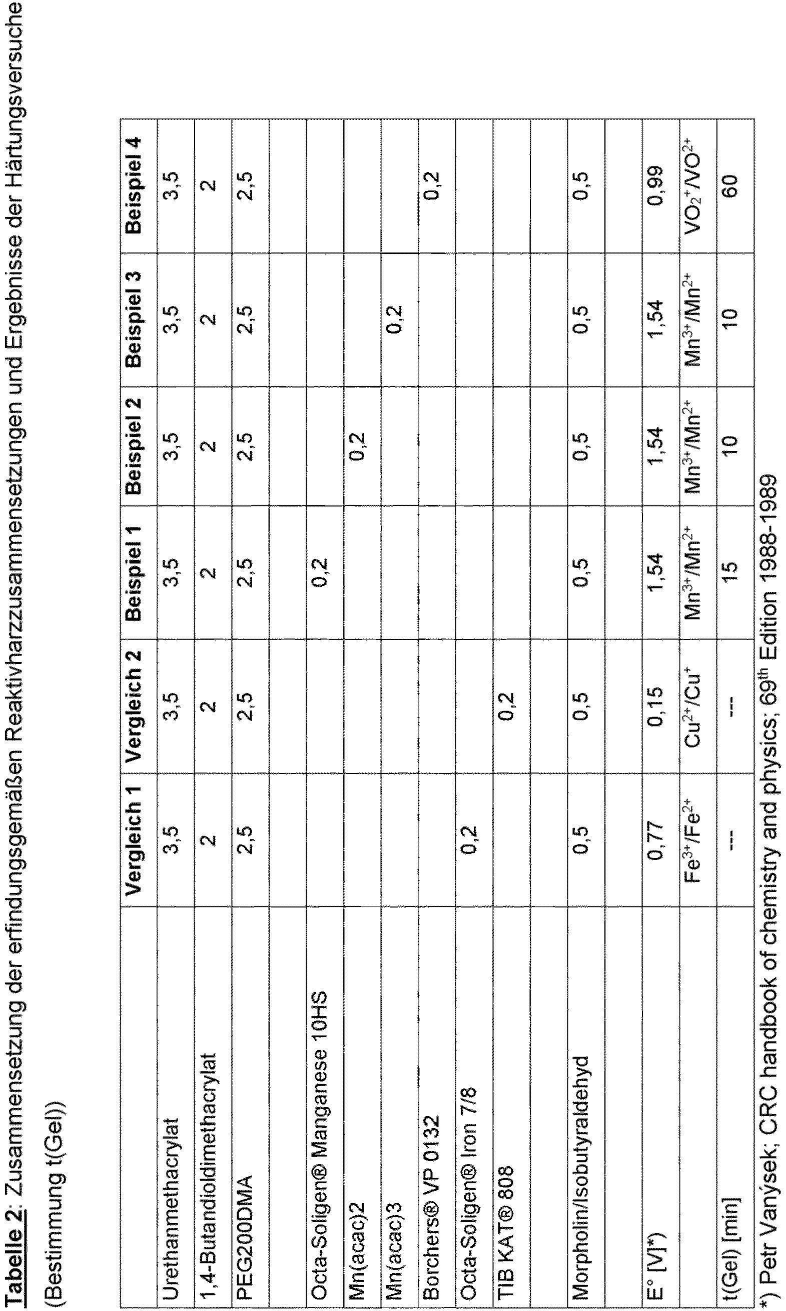

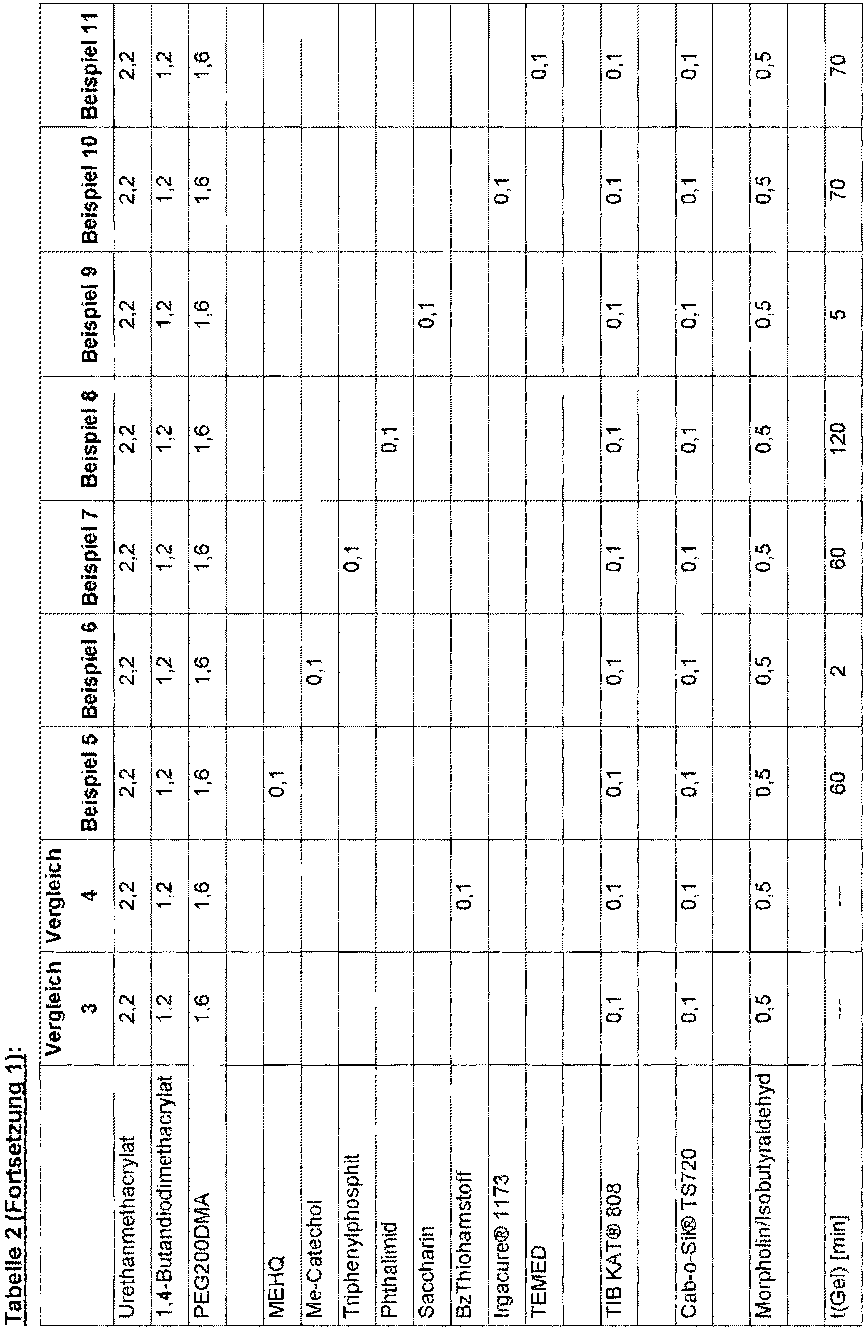

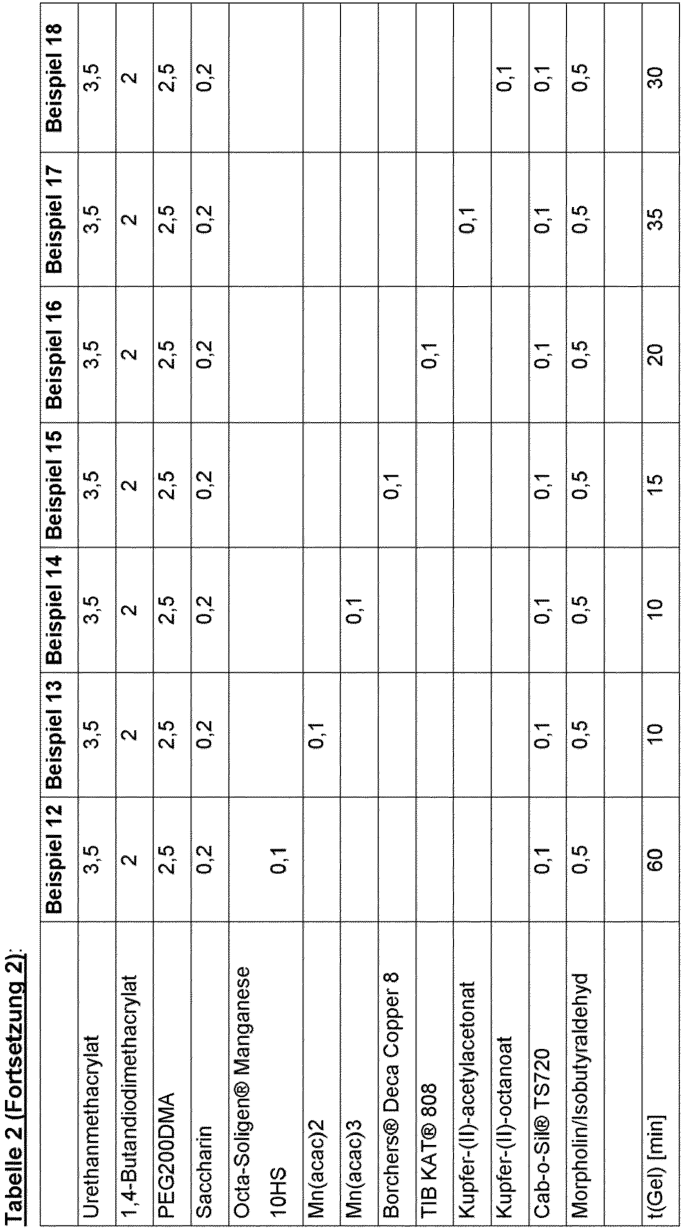

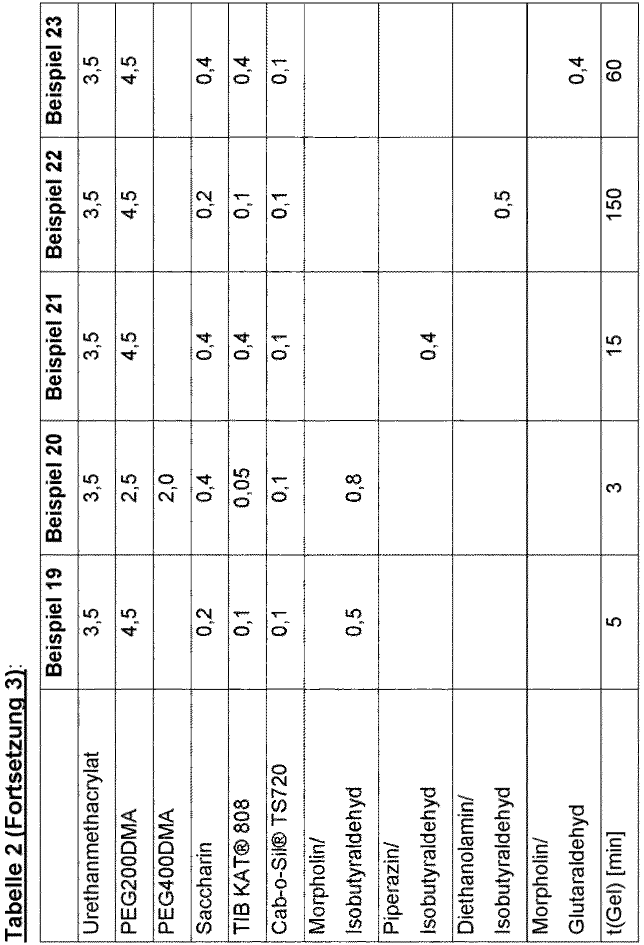

### Herstellung von Zweikomponenten-Mörtelmassen

### Herstellung der Reaktivharzkomponenten

Alle in Tabelle 6 enthaltenen Bestandteile der jeweiligen Reaktivharzkomponenten sowie Aktivatoren und Inhibitoren wurden in einen Kunststoffbecher gegeben und auf einem Magnetrührer bei 50°C bis zur Homogenität der Mischung geführt. Nach Zugabe der Kieselsäure sowie der Füllstoffe wurde von Hand mittels Holzspatel kurz vorgerührt und die Komponente im Dissolver (Fa. PC Laborsystem) 8 min bei 3500 U/m im Vakuum (80mPa) homogenisiert.

### Herstellung der Härterkomponenten

Die in den Beispielen verwendete Härterkomponenten wurden hergestellt, indem alle in Tabelle 5 der jeweiligen Härterkomponente zusammengegeben wurden und in einem Dissolver (Typ LDV) für 8 Minuten bei 3500 U/min im Vakuum bei einem Druck von 80 mPa miteinander vermischt wurden.

### Herstellung der Mörtelmassen

Zur Herstellung der Mörtelmassen wurden jeweils die Reaktivharz- und die Härterkomponente gemäß Tabellen 6 und 7 in Hartkartuschen im angegebenen Volumenverhältnis abgefüllt und über einen statischen Mischer (HIT-RE-M, Fa. Hilti) ins Bohrloch appliziert.

### Herstellung der Vergleichs-Reaktivharzkomponenten und Härterkomponenten

Die Vergleichs-Reaktivharzkomponenten und Vergleichs-Härterkomponenten wurden in Anlehnung an die EP 3313896 B1, EP 3775017 A1 sowie WO 2022002567 A1 hergestellt. Da dort verwendete ,Additive` nicht offengelegt wurden, wurden marktübliche Verdickungsmittel zugesetzt.

### Messung der Gelierzeit

Die Bestimmung der Gelierzeit der in dieser Weise erhaltenen Mischung aus den Reaktivharz- und Härterkomponenten erfolgte mit einer handelsüblichen Vorrichtung (GELNORMO-Gel Timer) bei einer Temperatur von 25°C. Hierzu wurden die Reaktivharz- und die Härter-Komponente im angegebenen Volumenverhältnis gemischt und unmittelbar nach dem Mischen die Temperatur der Probe gemessen. Die Probe selbst befindet sich dabei in einem Reagenzglas, das mit einem Luftmantel in einem auf 25°C temperierten Silikonbad angeordnet ist.

### Bestimmung der Lastwerte

Zur Bestimmung der Lastwerte der ausgehärteten Masse verwendete man eine hochfeste Ankergewindestange M12, die in ein Bohrloch mit einem Durchmesser von 14 mm und einer Bohrlochtiefe von 72 mm in C20/25 Beton nach Reinigung mit Druckluft (zweimal mit 6 Bar ausgeblasen) und passender Stahlbürste (zweimal gebürstet) sowie nochmaligem Ausblasen (zweimal 6 Bar) mit der jeweiligen chemischen Mörtelmasse bei ca. 20°C eingedübelt wurde.

Man ermittelte die mittlere Versagenslast (R1) durch zentrisches Ausziehen der Ankergewindestange mit enger Abstützung. Es wurden jeweils fünf Ankergewindestangen eingedübelt und nach einer Aushärtezeit von 24 Stunden bei Raumtemperatur wurden die Lastwerte bestimmt. Die hierbei ermittelten mittleren Lastwerte (Durchschnitt der fünf Messungen) sind in der (nachfolgenden) Tabelle 6 aufgeführt.

Die Bestimmung der Versagenslast im feuchten Beton (B7) wurde analog durchgeführt, wobei die Bohrlöcher in 4 Wochen unter Wasser gelagertem Beton erstellt wurden. Der Betonklotz wurde nur kurzzeitig für den Versuch aus dem Wasser entnommen. Die Reinigung erfolgte hier nach dem Bohren durch jeweils einmaliges Ausblasen, Bürsten mit der Stahlbürste und wiederum Ausblasen mit 6 Bar Druckluft.

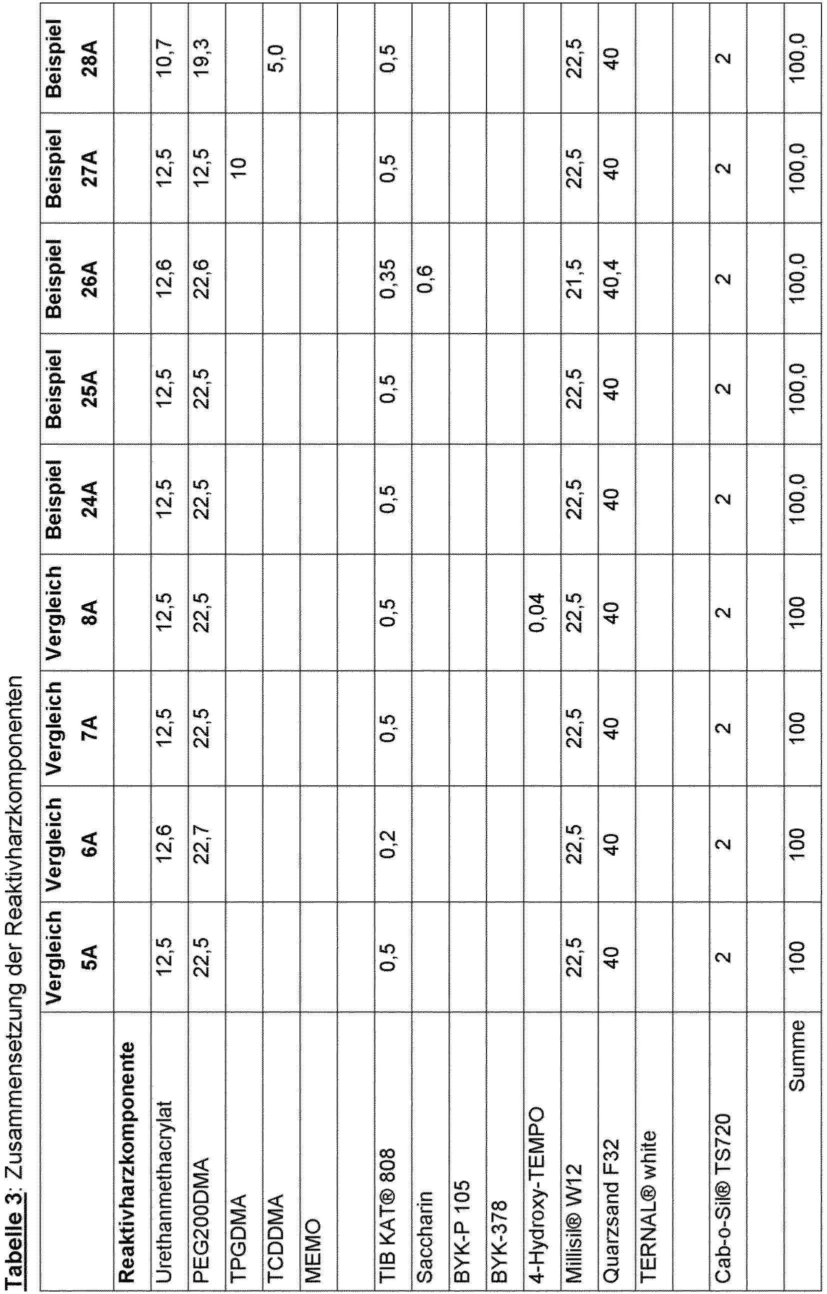

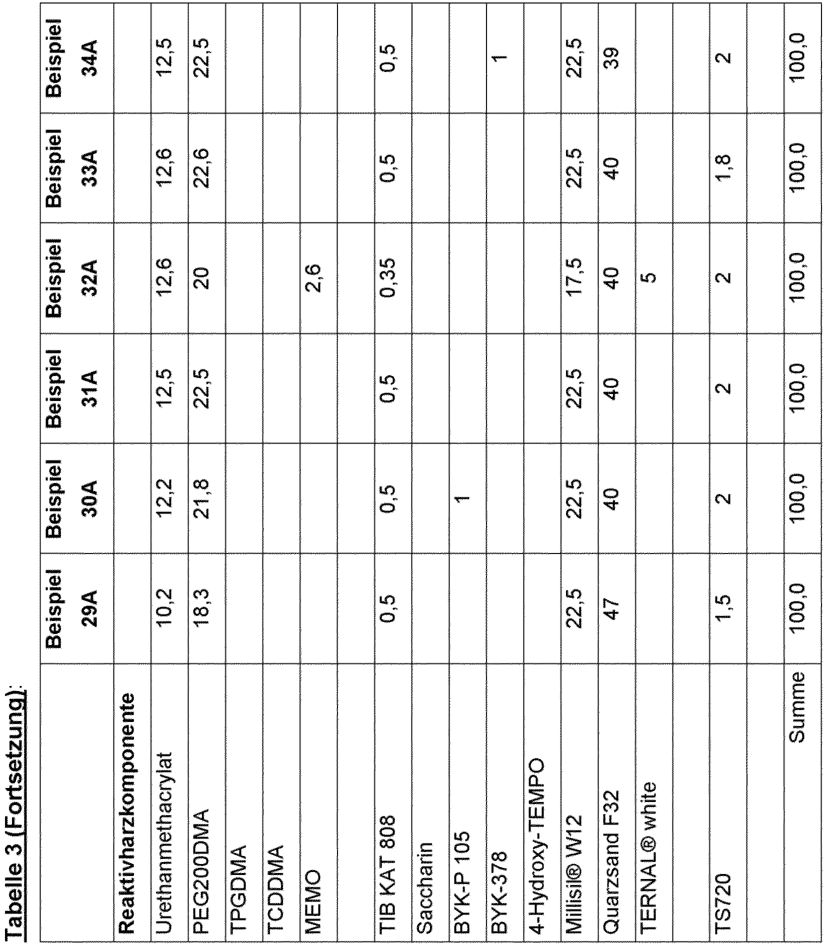

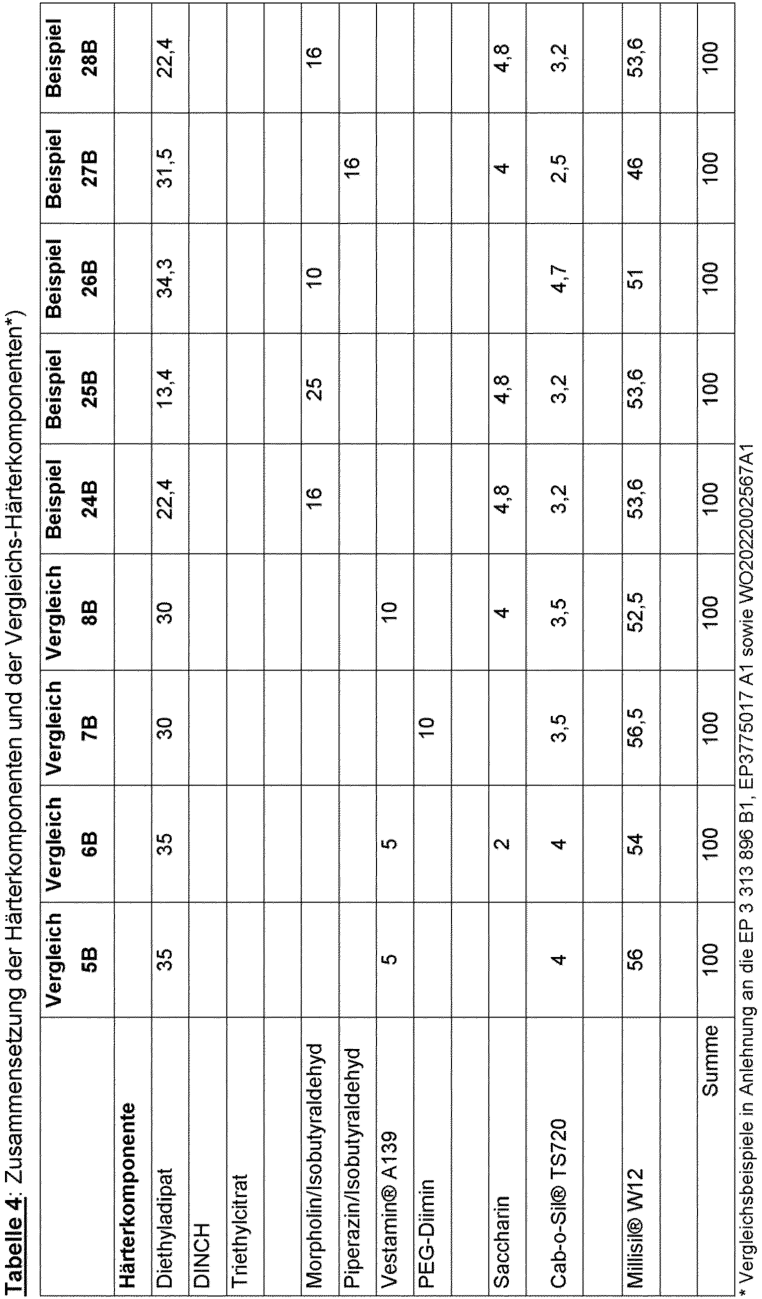

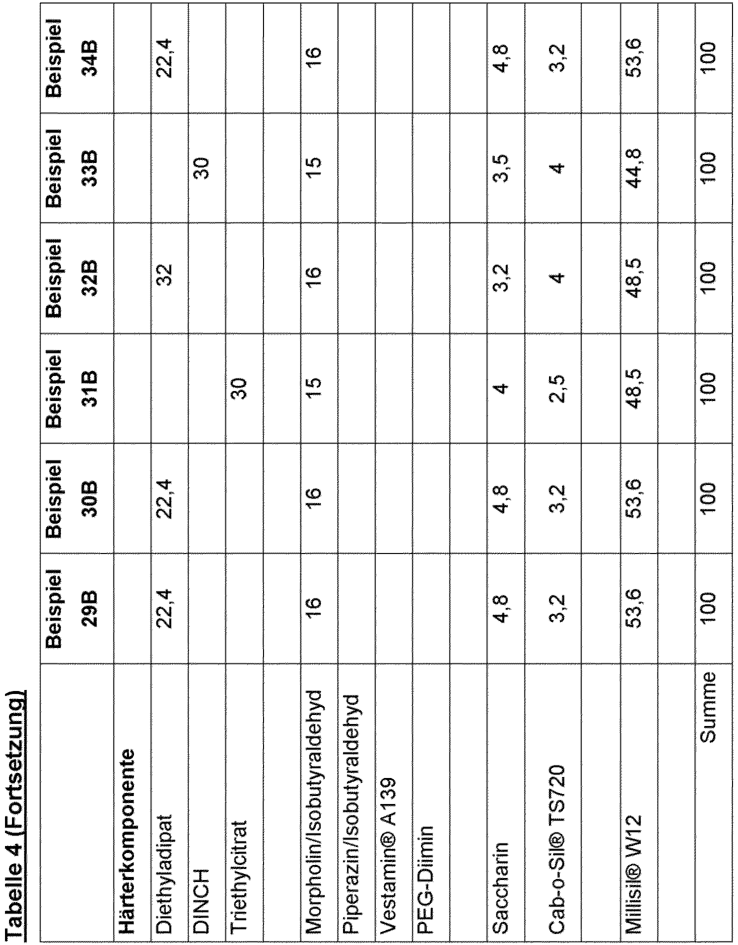

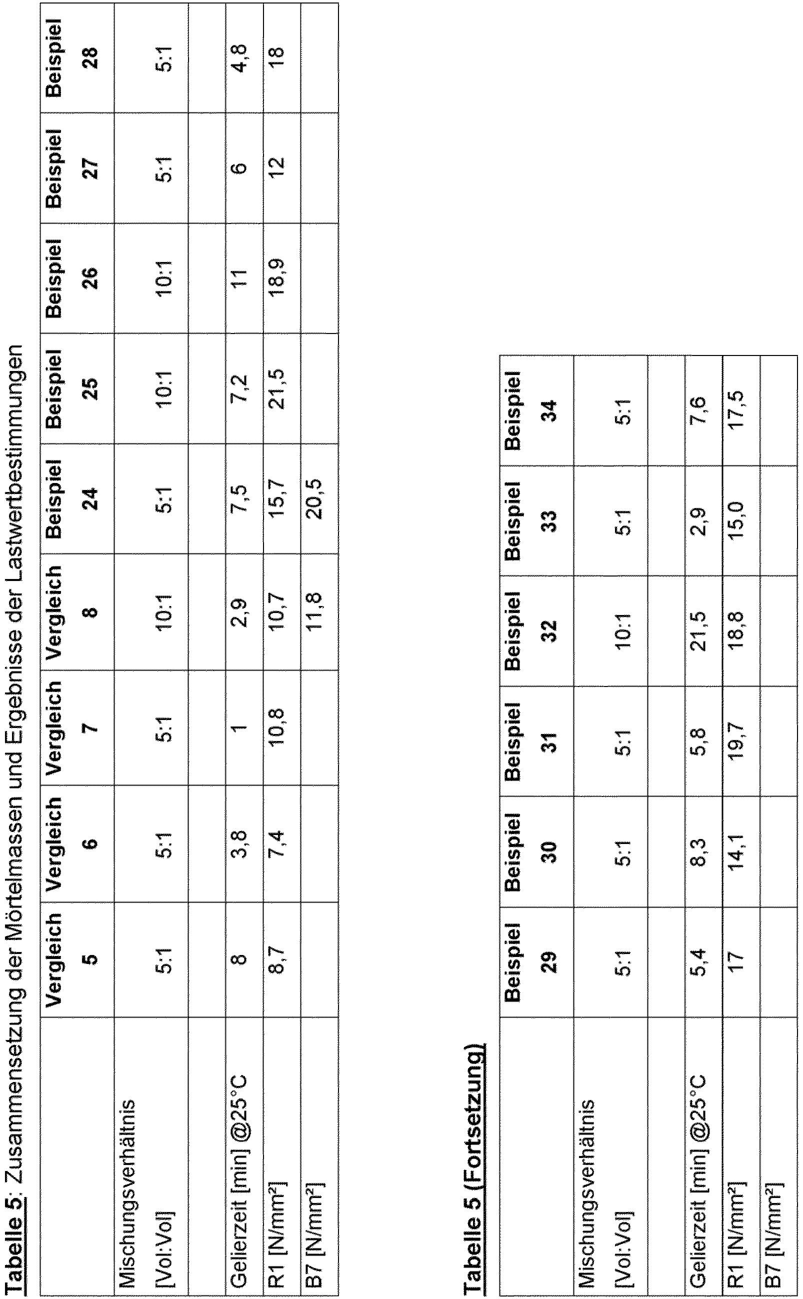

## Patentansprüche

1. **Härtersystem** für ein Reaktivharzsystem, welches radikalisch polymerisierbare Verbindungen beinhaltet, wobei das Härtersystem
a) eine Verbindung der Formel (I) 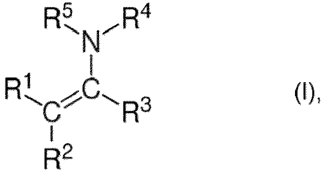 worin
R¹, R² und R³ jeweils unabhängig voneinander ein Wasserstoffatom, eine lineare oder verzweigte Alkyl-, lineare oder verzweigte Alkenyl-, lineare oder verzweigte Alkylen-, Cycloalkyl-, Cycloalkenyl- oder Ar(alk)ylgruppe, wobei die Cycloalkyl-, die Cycloalkenyl und die Ar(alk)ylgruppe jeweils gegebenenfalls mindestens ein Heteroatom enthalten können und/oder substituiert sein können, sind,
R⁴ und R⁵ jeweils unabhängig voneinander eine lineare oder verzweigte Alkyl-, lineare oder verzweigte Alkenyl-, lineare oder verzweigte Alkylen-, Cycloalkyl-, Cycloalkenyl- oder Ar(alk)ylgruppe, wobei die Cycloalkyl-, Cycloalkenyl- und die Ar(alk)ylgruppe die jeweils mindestens ein Heteroatom enthalten können und/oder substituiert sein können, sind, oder
R¹ und R², R¹ und R³, R² und R³ sowie R⁴ und R⁵ zusammen jeweils unabhängig voneinander eine Cycloalkylen- oder Cycloalkenylgruppe, die jeweils auch Heteroatome im oder am Ring enthalten können und/oder substituiert sein können, bilden,
und
b) ein Übergangsmetall in Form eines Salzes oder einer Verbindung/eines Komplexes,
umfasst.

2. Härtersystem nach Anspruch 1, wobei R¹, R² und R³ unabhängig voneinander ein Wasserstoffatom oder eine lineare oder verzweigte Alkylgruppe sind.

3. Härtersystem nach Anspruch 2, wobei R¹ und R² unabhängig voneinander eine lineare oder verzweigte eine C₁-C₁₀-Alkylgruppe, insbesondere lineare C₁-C₆-Alkylgruppe sind und R³ ein Wasserstoffatom oder C₁-C₆-Alkylgruppe ist.

4. Härtersystem nach Anspruch 3, wobei R¹ und R² unabhängig voneinander eine C₁-C₃-Alkylgruppe sind und R³ ein Wasserstoffatom ist.

5. Härtersystem nach einem der vorhergehenden Ansprüche, wobei R⁴ und R⁵ zusammen eine Alkylen-, Cycloalkylen- oder Cycloalkenylgruppe, die gegebenenfalls mindestens ein Heteroatom enthält, bilden.

6. Härtersystem nach Anspruch 5, wobei R⁴ und R⁵ zusammen eine heterocyclische Cycloalkylengruppe mit einem Heteroatom oder zwei Heteroatomen bilden.

7. Härtersystem nach Anspruch 6, wobei R⁴ und R⁵ eine C₅-C₆-Cycloalkylengruppe, die ein Stickstoffatom (N) und/oder ein Sauerstoffatom (O) als Heteroatome trägt, bilden.

8. Härtersystem nach einem der vorhergehenden Ansprüche, wobei das Übergangsmetall aus der Gruppe bestehend aus Kupfer, Eisen, Vanadium, Mangan, Cer, Kobalt, Zirkonium, oder Wismut, oder Gemischen von zwei oder mehr davon ausgewählt ist.

9. Härtersystem nach einem der vorherigen Ansprüche, wobei das Übergangsmetall in Form einer Verbindung ein Übergangsmetallcarboxylat ist.

10. Härtersystem nach einem der vorhergehenden Ansprüche, ferner umfassend einen Co-Aktivator, insbesondere Saccharin.

11. **Verwendung** eines Härtersystems nach einem der Ansprüche 1 bis 10 als Initiatorsystem für ein Reaktivharzsystem auf Basis radikalisch polymerisierbarer Verbindungen.

12. Verwendung nach Anspruch 11, wobei das Reaktivharzsystem eines für die chemische Befestigung ist.

13. **Reaktivharzsystem,** welches ein Härtersystem nach einem der Ansprüche 1 bis 10 und eine radikalisch polymerisierbare Verbindung als Reaktivharz umfasst.

14. Reaktivharzsystem nach Anspruch 13, wobei die radikalisch polymerisierbare Verbindung aus der Gruppe, bestehend aus Verbindungen auf Urethan(meth)acrylatbasis, Verbindungen auf Epoxy(meth)acrylatbasis, Methacrylaten von alkoxylierten Bisphenolen, Verbindungen auf Basis weiterer ethylenisch ungesättigter Verbindungen und Kombinationen davon, ausgewählt ist.

15. Reaktivharzsystem nach einem der Ansprüche 13 oder 14, ferner umfassend organische und/oder anorganische Additive und/oder Füllstoffe.

16. **Mehrkomponenten-Reaktivharzsystem** mit einer Harzkomponente und einer Härterkomponente, wobei die Harzkomponente eine radikalisch polymerisierbare Verbindung, einen Reaktivverdünner und ein Übergangsmetall in Form eines Salzes oder einer Verbindung/eines Komplexes enthält und die Härterkomponente eine Verbindung der Formel (I) 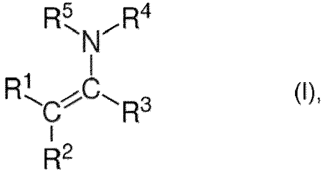 worin
R¹, R² und R³ jeweils unabhängig voneinander ein Wasserstoffatom, eine lineare oder verzweigte Alkyl-, lineare oder verzweigte Alkenyl-, lineare oder verzweigte Alkylen-, Cycloalkyl-, Cycloalkenyl- oder Ar(alk)ylgruppe, wobei die Cycloalkyl-, die Cycloalkenyl und die Ar(alk)ylgruppe jeweils gegebenenfalls mindestens ein Heteroatom enthalten können und/oder substituiert sein können, sind,
R⁴ und R⁵ jeweils unabhängig voneinander eine lineare oder verzweigte Alkyl-, lineare oder verzweigte Alkenyl-, lineare oder verzweigte Alkylen-, Cycloalkyl-, Cycloalkenyl- oder Ar(alk)ylgruppe, wobei die Cycloalkyl-, Cycloalkenyl- und die Ar(alk)ylgruppe die jeweils mindestens ein Heteroatom enthalten können und/oder substituiert sein können, sind, oder
R¹ und R², R¹ und R³, R² und R³ sowie R⁴ und R⁵ zusammen jeweils unabhängig voneinander eine Cycloalkylen- oder Cycloalkenylgruppe, die jeweils auch Heteroatome im oder am Ring enthalten können und/oder substituiert sein können, bilden, enthält.

17. Mehrkomponenten-Reaktivharzsystem nach Anspruch 16, wobei die Reaktivharzkomponente und/oder die Härterkomponenten ferner anorganische und/oder organische Additive und Füllstoffe enthält.

18. **Verwendung** eines Reaktivharzsystems nach einem der Ansprüche 13 bis 15 oder eines Mehrkomponenten-Reaktivharzsystems nach einem der Ansprüche 16 oder 17 als Klebstoff, Beschichtungsstoff oder Formmasse.

19. **Verwendung** eines Reaktivharzsystems nach einem der Ansprüche 13 bis 15 oder eines Mehrkomponenten-Reaktivharzsystems nach einem der Ansprüche 16 oder 17 zur Befestigung von Verankerungsmitteln in Substraten.
